(19)

Europäisches
Patentamt
European
Patent Office
Office européen
des brevets

(11) **EP 4 328 814 A1**

(12) **EUROPEAN PATENT APPLICATION**
published in accordance with Art. 153(4) EPC

(43) Date of publication:
**28.02.2024 Bulletin 2024/09**

(51) International Patent Classification (IPC):
**G06N 20/00** (2019.01)

(21) Application number: **22810410.5**

(86) International application number:
**PCT/CN2022/093183**

(22) Date of filing: **17.05.2022**

(87) International publication number:
**WO 2022/247683 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2021 CN 202110573525**

(71) Applicant: **Huawei Technologies Co., Ltd.**
**Longgang**
**Shenzhen, Guangdong 518129 (CN)**

(72) Inventors:
• **LI, Yinchuan**
**Shenzhen, Guangdong 518129 (CN)**
• **SHAO, Yunfeng**
**Shenzhen, Guangdong 518129 (CN)**
• **QIAN, Li**
**Shenzhen, Guangdong 518129 (CN)**

(74) Representative: **Maiwald GmbH**
**Engineering**
**Elisenhof**
**Elisenstrasse 3**
**80335 München (DE)**

(54) **FEDERATED LEARNING METHOD, APPARATUS, AND SYSTEM**

(57)     This application provides a federated learning method, apparatus, and system, so that a server retrains a received model in a federated learning process to implement depersonalization processing to some extent, to obtain a model with higher output precision. The method includes: First, a first server receives information about at least one first model sent by at least one downstream device, where the at least one downstream device may include another server or a client connected to the first server; the first server trains the at least one first model to obtain at least one trained first model; and then the first server aggregates the at least one trained first model, and updates a locally stored second model by using an aggregation result, to obtain an updated second model.

FIG. 6

**EP 4 328 814 A1**

**Description**

This application claims priority to Chinese Patent Application No. "202110573525.4", filed with the China National Intellectual Property Administration on May 25, 2021 and entitled "FEDERATED LEARNING METHOD, APPARATUS, AND SYSTEM", which is incorporated herein by reference in its entirety.

**TECHNICAL FIELD**

This application relates to the field of artificial intelligence, and in particular, to a federated learning method, apparatus, and system.

**BACKGROUND**

Federated learning (Federated Learning) is a machine learning framework proposed for the existence of "data silos". It can effectively help participants (clients) perform joint training when there is no need to share a data resource, in other words, training data is stored locally, to establish a shared machine learning model.

In actual deployment, to resolve a problem of a long transmission delay caused because a client is relatively far from a server, an intermediate-layer server (an edge server) is generally introduced between the server and the client to form a client-edge-cloud layered architecture. The edge server is closer to the client, greatly reducing a transmission delay. However, during federated learning, there is a relatively high probability that training data between clients is heterogeneous data. Therefore, a model obtained by directly aggregating models obtained by the clients by training may have relatively low accuracy.

**SUMMARY**

This application provides a federated learning method, apparatus, and system, so that a server retrains a client-side model in a federated learning process to implement depersonalization processing to some extent, to obtain a model with higher output precision.

In view of this, according to a first aspect, this application provides a federated learning method. The method includes: First, a first server receives information about at least one first model sent by at least one downstream device, where the at least one downstream device may include another server, a client, or the like that is connected to the first server; the first server trains the at least one first model to obtain at least one trained first model; and then the first server aggregates the at least one trained first model, and updates a locally stored second model based on an aggregation result, to obtain an updated second model.

Therefore, in this implementation of this application, a downstream device may obtain a first model based on personalized data of the downstream device, and the server may retrain the first model after receiving the first model fed back from the downstream device, to implement depersonalization processing on the first model to some extent, for example, removing some noise or adapting to a model difference between downstream devices caused due to different data distribution. In this way, a model generalization capability is improved, and output accuracy of a finally obtained model is improved. This can be understood that, a data distribution difference between downstream devices is moderately utilized to remove, through retraining, a feature that is in each first model and that is unfavorable to fusion, while ensuring model personalization of each downstream device. In this way, a model obtained through fusion of a plurality of retrained first models has higher accuracy and a higher generalization capability.

In a possible implementation, that the first server trains the at least one first model to obtain at least one trained first model may include: The first server trains the at least one first model under a constraint of a first sparsity constraint condition, to obtain the at least one trained first model, where the first sparsity constraint condition includes a constraint formed by a function for reducing parameters in the first model.

Therefore, in this implementation of this application, the first server may train the first model under the constraint of the first sparsity constraint condition, to obtain a trained first model with fewer parameters. This reduces communication resources required during transmission of the first model between the first server and another device, and reduces communication costs.

In a possible implementation, that the first server trains the at least one first model to obtain at least one trained first model may include: The first server trains the at least one first model under constraints of a first sparsity constraint condition and a first distance constraint condition, to obtain the at least one trained first model, where the first distance constraint condition includes a constraint formed by a similarity or a distance between the at least one first model and the second model.

Therefore, in this implementation of this application, the first server may train the received first model based on the sparsity constraint, to reduce a quantity of parameters of the finally obtained model, reduce a communication amount during transmission of the first model between the first server and another device, and reduce communication costs. In addition, the first server may further train the first model under a distance constraint, to implement depersonalization processing on the first model to some extent, and improve a generalization capability of the first model, to obtain a model that adapts to data distribution characteristics of the first server and a downstream device. In this way, a specific similarity or distance between the first model and the second model can be maintained to obtain a model with high output accuracy.

Optionally, the first distance constraint condition may specifically include one or more of the following: a constraint formed by one or more of a Euclidean distance, a Minkowski distance (or referred to as a Minkowski distance), a Manhattan distance, a Chebyshev distance, a Minkowski distance, a Mahalanobis distance, mutual information, a cosine similarity, a Pearson correlation coefficient, an entropy function, an inner product, or the like.

In a possible implementation, that the first server trains the at least one first model under constraints of a first sparsity constraint condition and a first distance constraint condition, to obtain the at least one trained first model may include: The first server perturbs the at least one first model by using noise, to obtain at least one updated first model; and the first server trains the at least one first model under the constraints of the first sparsity constraint condition and the first distance constraint condition, to obtain the at least one trained first model.

Therefore, in this implementation of this application, a new first model may be obtained by applying noise perturbation. In this way, depersonalization processing on the first model is implemented to some extent through perturbation to obtain the new first model, so that the first server subsequently retrains the first model.

In a possible implementation, the first distance constraint condition may further include a constraint formed by a similarity or a distance between the second model and a third model. The third model is a model sent by an upstream device of the first server to the first server. The upstream device may include an edge server, a cloud server, or the like that establishes a connection to the first server.

Therefore, in this implementation of this application, the distance constraint may further include the similarity or the distance between the second model locally stored in the server and the third model sent by the upstream device. In this way, a finally obtained model may use the similarity or the distance between the second model and the third model as a constraint, so that the finally obtained model can adapt to a data distribution difference between the first server and the upstream device. This improves a generalization capability of the finally obtained model.

In a possible implementation, the first sparsity constraint condition includes a norm of a vector or matrix of the at least one first model; and the norm includes an $l_0$ norm, an $l_1$ norm, an $l_p$ norm, an $l_{12}$ norm, an $l_{p2}$ norm, a continuous function obtained after $l_0$ norm transformation, a continuous function obtained after $l_1$ norm transformation, a continuous function obtained after $l_p$ norm transformation, a continuous function obtained after $l_{12}$ norm transformation, or a continuous function obtained after $l_{p2}$ norm transformation; and $p \in (0,1)$.

Therefore, in this implementation of this application, a plurality of norms or variants of the norms may be used to implement a sparsity constraint, to reduce parameters in a model, reduce communication resources required for model transmission between devices, and reduce communication costs.

In a possible implementation, before the first server receives the information about the at least one first model sent by the at least one downstream device, the method further includes: The first server receives a third model sent by an upstream device to the first server; and the first server updates a locally stored model based on the third model, to obtain a second model.

Therefore, in this implementation of this application, the first server may further receive the third model sent by the upstream device, to update the local model to obtain the second model, to obtain a new second model.

In a possible implementation, after the first server obtains the updated second model, the method provided in this application may further include: The first server trains the third model to obtain an updated third model, where the third model is a model sent by the upstream device to the first server.

Therefore, in this implementation of this application, the first server may further receive the third model sent by the second server, to update the local model to obtain the second model. Then, after the second model is obtained by updating based on the first model, the third model may be trained, so that the third model may be trained based on the sparse second model. This implements depersonalization processing to some extent and improves a model generalization capability.

In a possible implementation, that the first server trains the third model to obtain an updated third model may include: The first server trains the third model under a constraint of a second sparsity constraint condition, to obtain the trained third model, where the second sparsity constraint condition includes a constraint formed by a function for reducing parameters in the third model.

In this implementation of this application, the first server may further train the third model under the sparsity constraint, to reduce parameters in the third model, reduce communication resources required by the first server to transmit the third model, and reduce communication costs.

In a possible implementation, the method provided in this application may further include: The first server sends information about the trained third model to the upstream device. For example, when the trained third model meets a first preset condition, the first server may send the information about the trained third model to the upstream device.

Therefore, in this implementation of this application, the trained third model may be fed back to the upstream device, so that a model in the upstream device is updated by using the first server.

Optionally, the first preset condition may specifically include but is not limited to one or more of the following: Output precision of the trained third model exceeds a first threshold, or average output precision of the trained third model exceeds a second threshold, or a quantity of update times of the third model reaches a preset quantity of times.

In a possible implementation, the method provided in this application may further include: The first server sends the updated second model to the at least one downstream device as a new first model, and sends information about the updated second model, so that the at least one downstream device trains the new first model. For example, when the trained third model does not meet the first preset condition, the first server may send the information about the new first model to the at least one downstream device.

Therefore, in this implementation of this application, the first server may continue to send the information about the new first model to the at least one downstream device, so that the at least one downstream device trains the updated second model, and performs a next round of iteration, until a third model that meets a requirement is obtained.

In a possible implementation, after the first server obtains the updated second model, the method provided in this application may further include: The first server sends information about the updated second model to the upstream device, so that the upstream device trains the third model based on the information about the updated second model, to obtain a trained third model.

Therefore, in this implementation of this application, the first server may send the updated second model to the upstream device, and the upstream device updates the third model, thereby reducing workload of the first server.

Optionally, if the upstream device trains the third model, whether the updated second model meets a convergence condition may be determined. The convergence condition may include the first preset condition or a condition similar to the first preset condition. Therefore, when the second model meets the convergence condition, this round of iteration is completed, and the upstream device trains the third model.

According to a second aspect, this application provides a federated learning method. The method includes: First, a first client receives information about a first model sent by a first server; the first client trains the first model under a constraint of a third sparsity constraint condition, to obtain a trained first model, where the third sparsity constraint condition includes a constraint formed by a function for reducing parameters in the first model; and the first client sends information about the trained first model to the first server, so that the first server trains the locally stored first model based on the received information about the trained first model, to obtain a new first model.

Therefore, in this implementation of this application, after receiving the model delivered by the server, the client may train the model under the sparsity constraint, to obtain the first model with a smaller quantity of parameters. Therefore, the model with a smaller quantity of parameters may be fed back to the first server, thereby reducing required communication resources and reducing communication costs.

In a possible implementation, that the first client trains the first model under a constraint of a third sparsity constraint condition, to obtain a trained first model may include: The first client trains the first model under constraints of the third sparsity constraint condition and a second distance constraint condition, to obtain the trained first model, where the second distance constraint condition includes a constraint formed by a similarity or a distance between the first model and a locally stored fourth model.

Therefore, in this implementation of this application, in addition to a sparsity constraint, a distance constraint may be further applied. Due to the distance constraint, the client can search for a personalization model that can adapt to a local data set in the client and that is different from an edge server model delivered by an edge server, to alleviate difficulty in federated learning and training caused by heterogeneity of data in different clients in federated learning.

For example, a second distance constraint may be added to a loss function, and the second distance constraint may specifically include one or more of the following: one or more of a Euclidean distance, a Minkowski distance (or referred to as a Minkowski distance), a Manhattan distance, a Chebyshev distance, a Minkowski distance, a Mahalanobis distance, mutual information, a cosine similarity, a Pearson correlation coefficient, an entropy function, or the like.

According to a third aspect, an embodiment of this application provides a federated learning apparatus. The federated learning apparatus has a function of implementing the federated learning method in the first aspect. The function may be implemented by hardware, or may be implemented by hardware executing corresponding software. The hardware or the software includes one or more modules corresponding to the foregoing function.

According to a fourth aspect, an embodiment of this application provides a federated learning apparatus. The federated learning apparatus has a function of implementing the federated learning method in the second aspect. The function may be implemented by hardware, or may be implemented by hardware executing corresponding software. The hardware or the software includes one or more modules corresponding to the foregoing function.

According to a fifth aspect, an embodiment of this application provides a federated learning apparatus, including a processor and a memory. The processor and the memory are connected to each other through a line, and the processor invokes program code in the memory to perform a processing-related function in the federated learning method in any implementation of the first aspect. Optionally, the federated learning apparatus may be a chip.

According to a sixth aspect, an embodiment of this application provides a federated learning apparatus, including a processor and a memory. The processor and the memory are connected to each other through a line, and the processor invokes program code in the memory to perform a processing-related function in the first method in any implementation of the second aspect. Optionally, the federated learning apparatus may be a chip.

According to a seventh aspect, an embodiment of this application provides a digital processing chip or a chip. The chip includes a processing unit and a communication interface. The processing unit obtains program instructions through the communication interface. The program instructions are executed by the processing unit, and the processing unit is configured to perform a processing-related function in any optional implementation of the first aspect or the second aspect.

According to an eighth aspect, an embodiment of this application provides a computer-readable storage medium including instructions. When the instructions are run on a computer, the computer is enabled to perform the method in any optional implementation of the first aspect or the second aspect.

According to a ninth aspect, an embodiment of this application provides a computer program product including a computer program/instructions. When the computer program product is executed by a processor, the processor is enabled to perform the method in any optional implementation of the first aspect or the second aspect.

## BRIEF DESCRIPTION OF DRAWINGS

FIG. 1 is a schematic diagram of a structure of an artificial intelligence main framework;
FIG. 2 is a schematic diagram of an architecture of a federated learning system according to this application;
FIG. 3 is a schematic diagram of an architecture of another federated learning system according to this application;
FIG. 4 is a schematic diagram of an architecture of another federated learning system according to this application;
FIG. 5 is a schematic diagram of an architecture of another federated learning system according to this application;
FIG. 6 is a schematic flowchart of a federated learning method according to this application;
FIG. 7 is a schematic flowchart of another federated learning method according to this application;
FIG. 8A and FIG. 8B are a schematic flowchart of another federated learning method according to this application;
FIG. 9 is a schematic flowchart of another federated learning method according to this application;
FIG. 10 is a schematic flowchart of another federated learning method according to this application;
FIG. 11 is a schematic diagram of a structure of a federated learning apparatus according to this application;
FIG. 12 is a schematic diagram of a structure of another federated learning apparatus according to this application;
FIG. 13 is a schematic diagram of a structure of a server according to this application; and
FIG. 14 is a schematic diagram of a structure of a client according to this application.

## DESCRIPTION OF EMBODIMENTS

The following describes technical solutions in embodiments of this application with reference to accompanying drawings in embodiments of this application. Apparently, the described embodiments are merely a part rather than all of embodiments of this application. All other embodiments obtained by a person of ordinary skill in the art based on embodiments of this application without creative efforts shall fall within the protection scope of this application.

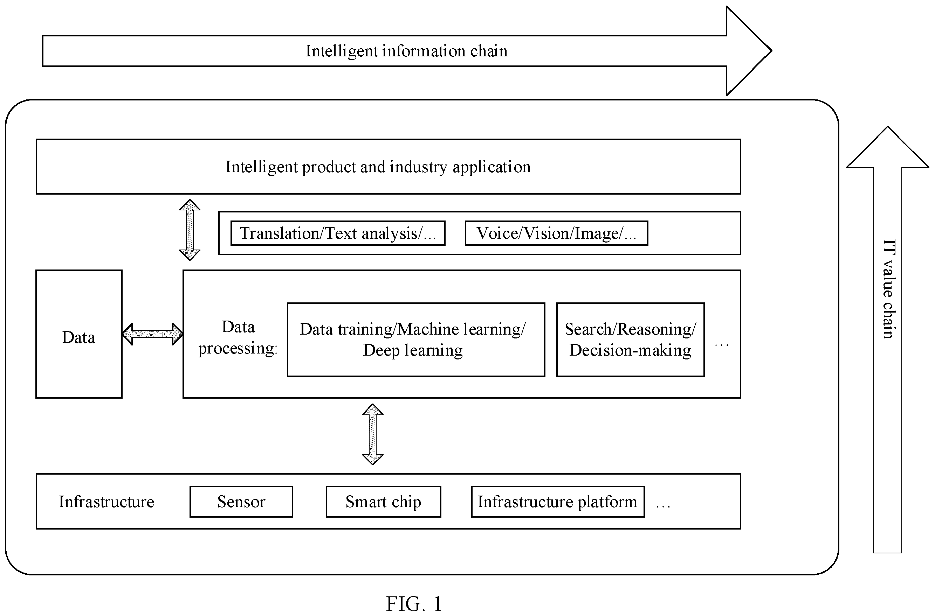

An overall working procedure of an artificial intelligence system is first described. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from data obtaining to processing. For example, the processes may be a general process of intelligent information perception, intelligent information representation and formation, intelligent reasoning, intelligent decision-making, and intelligent execution and output. In this process, data has undergone a condensing process of "data-information-knowledge-wisdom". The "IT value chain" is an industrial ecological process from underlying infrastructure of artificial intelligence to artificial intelligence information (providing and processing technical implementation) and then to an artificial intelligence system, and reflects value brought by artificial intelligence to the information technology industry.

(1) Infrastructure

The infrastructure provides support of a computing capability for an artificial intelligence system to implement communication with the outside world and implement support by using an infrastructure platform. The infrastructure communicates with the outside world by using a sensor. The computing capability is provided by a smart chip, for example, a hardware acceleration chip such as a central processing unit (central processing unit, CPU), a network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The infrastructure platform includes related platform assurance and support such as a distributed computing framework and a network, and may include cloud storage and computing, an interconnection network, and the like. For example, the sensor communicates with the outside world to obtain data. The data is provided for a smart chip in a distributed computing system provided by the infrastructure platform, to perform computing.

(2) Data

Data at an upper layer of the infrastructure is used to represent a source of data in the field of artificial intelligence. The data relates to graphics, an image, a voice, and a text, and also relates to Internet of Things data of a conventional device, including service data of an existing system and perception data thereof such as force, displacement, a liquid level, a temperature, and humidity.

(3) Data processing

Data processing usually includes data training, machine learning, deep learning, searching, reasoning, decision making, and other manners.

Machine learning and deep learning may be used for performing symbolic and formalized intelligent information modeling, extraction, preprocessing, training, and the like on data.

Reasoning is a process of performing, through simulation of an intelligent reasoning mode of humans in a computer or an intelligent system, machine thinking and solving a problem based on a reasoning control policy by using formalized information. Typical functions are searching and matching.

Decision making is a process of performing decision making after reasoning on intelligent information is performed, and usually provides classification, sorting, prediction, and other functions.

(4) General capability

After data processing mentioned above is performed on data, some general capabilities may be further formed based on a data processing result. For example, the general capabilities may be an algorithm or a general system, for example, translation, text analysis, computer vision processing, speech recognition, and image recognition.

(5) Intelligent product and industry application

The intelligent product and industry application are products and applications of an artificial intelligence system in various fields. The intelligent product and industry application involve packaging of an overall artificial intelligence solution and productization and actual application of intelligent information decision-making. Application fields of the intelligent product and industry application mainly include an intelligent terminal, intelligent transportation, intelligent healthcare, self-driving, a smart city, and the like.

Examples in this application are mainly applied to training of a machine learning model used in various scenarios in which federated learning is used. A trained machine learning model may be applied to the foregoing various application fields to implement classification, regression, or another function. A processing object of the trained machine learning model may be an image sample, a discrete data sample, a text sample, a speech sample, or the like. This is not exhaustive herein. The machine learning model may be specifically represented as a neural network, a linear model, another type of machine learning model, or the like. Correspondingly, a plurality of modules forming the machine learning model may be specifically represented as a neural network module, a linear model module, a module forming another type of machine learning model, or the like. This is not exhaustive herein. In subsequent embodiments, only an example in which the machine learning model is represented as a neural network is used for description. A case when the machine learning model is represented as a type of model other than the neural network may be understood by analogy. Details are not described in embodiments of this application.

Embodiments of this application may be applied to the field of federated learning, and may be used to train a neural network through collaboration between a client and a server. Therefore, the embodiments relate to a large quantity of related applications of the neural network, for example, a neural network trained by the client during federated learning. To better understand solutions provided in embodiments of this application, the following first describes related terms and concepts of a neural network that may be used in embodiments of this application.

(1) Neural network

The neural network may include a neural unit. The neural unit may be an arithmetic unit that uses xs and an intercept of 1 as an input. An output of the arithmetic unit may be shown by Formula (1-1):

$$h_{W,b}(x) = f(W^T x) = f(\sum_{s=1}^{n} W_s x_s + b)$$

s=1, 2, ..., and n, n is a natural number greater than 1, Ws is a weight of xs, and b is a bias of the neural unit. f is an activation function (activation functions) of the neural unit, and is used to introduce a nonlinear characteristic into the neural network to convert an input signal in the neural unit into an output signal. The output signal corresponding to the activation function may be used as an input of a next convolutional layer. The activation function may be a sigmoid function. The neural network is a network formed by linking a plurality of single neural units together. To be specific, an output of one neural unit may be an input of another neural unit. An input of each neural unit may be connected to a local receptive field of a previous layer to extract a feature of the local receptive field. The local receptive field may be an area including several neural units.

(2) Deep neural network

The deep neural network (deep neural network, DNN) is also referred to as a multilayer neural network, and may be understood as a neural network with a plurality of intermediate layers. The DNN is divided based on locations of different layers, and a neural network in the DNN may be divided into three types: an input layer, an intermediate layer, and an output layer. Usually, a first layer is an input layer; a last layer is an output layer; and all layers in the middle are intermediate layers, and are also referred to as hidden layers. Layers are fully connected to each other. To be specific, any neuron at an $i^{th}$ layer is definitely connected to any neuron at an $(i+1)^{th}$ layer.
Although the DNN looks quite complex, each layer thereof may be represented as a linear relationship expression: $\vec{y} = \alpha(w \vec{x} + \vec{b})$, where $\vec{x}$ is an input vector, $\vec{y}$ is an output vector, $\vec{b}$ is an offset vector that is also referred to as an offset parameter, w is a weight matrix (also referred to as a coefficient), and $\alpha()$ is an activation function. For each layer, only such a simple operation is performed on the input vector $\vec{x}$ to obtain the output vector $\vec{y}$. Because the DNN has a large quantity of layers, quantities of coefficients $W$ and offset vectors $\vec{b}$ are also relatively large. These parameters are defined in the DNN as follows: The coefficient w is used as an example. It is assumed that in a three-layer DNN, a linear coefficient corresponding to a fourth neuron at a second layer to a second neuron at a third layer is defined as $W_{24}^3$. The superscript 3 represents a quantity of layers that is corresponding to a coefficient $W$, while the subscript is corresponding to an output third layer index 2 and an input second layer index 4.
In summary, a coefficient corresponding to a $k^{th}$ neuron at an $(L-1)^{th}$ layer to a $j^{th}$ neuron at an $L^{th}$ layer is defined as $W_{jk}^L$.
It should be noted that, there is no parameter $W$ for the input layer. In the deep neural network, due to more intermediate layers, the network is more capable of describing a complex case in the real world. Theoretically, a model with more parameters has higher complexity and a larger "capacity". This means that the model can complete a more complex learning task. Training of the deep neural network is a process of learning a weight matrix, and a final objective of training is to obtain weight matrices (weight matrices formed by vectors $W$ at many layers) of all layers of a trained deep neural network.

(3) Convolutional neural network

The convolutional neural network (convolutional neuron network, CNN) is a deep neural network with a convolutional structure. The convolutional neural network includes a feature extractor that includes a convolutional layer and a sampling sublayer, and the feature extractor may be regarded as a filter. The convolutional layer is a neuron layer at which convolution processing is performed on an input signal in the convolutional neural network. At the convolutional layer of the convolutional neural network, one neuron may be connected only to some neurons at an adjacent layer. A convolutional layer usually includes several feature planes, and each feature plane may include some neural units that are in a rectangular arrangement. Neural units on one feature plane share a weight, and the shared weight herein is a convolution kernel. Weight sharing may be understood as that a manner of extracting image information is irrelevant to a position. The convolution kernel may be initialized in a form of a matrix of a random size. In a training process of the convolutional neural network, for the convolution kernel, an appropriate weight may be obtained through learning. In addition, immediate benefits of weight sharing are that connections between layers of the convolutional neural network are reduced, and an overfitting risk is reduced.

(4) Loss function

In a process of training a deep neural network, because an output of the deep neural network is expected to be as close as possible to a value that is really expected to be predicted, a predicted value of the current network may be compared with a target value that is really desired, and a weight vector of each layer of neural network may be updated based on a difference between the predicted value and the target value (certainly, there is usually an initialization process before update is performed for the first time. In other words, a parameter is pre-configured for each layer in the deep neural network). For example, if the predicted value of the network is large, the weight vector is adjusted to obtain a smaller predicted value. Adjustment is continuously performed until the deep neural network can predict the target value that is really desired or a value that is quite close to the value that is really desired. Therefore, it is necessary to predefine "how to compare the difference between the predicted value and the target value", which is a loss function (loss function) or an objective function (objective function). The functions are important equations used to measure the difference between the predicted value and the target value. The loss function is used as an example. A larger output value (loss) of the loss function indicates a larger difference. In this case, training of the deep neural network becomes a process of reducing the loss as much as possible. The loss function may usually include a square error, a mean squared error, a cross entropy, a logarithm, an exponent, and other loss functions. For example, the mean squared error may be used as a loss function, and is defined as $mse = \frac{1}{N}\sum_{n=1}^{N}(y_n - \hat{y}_n)^2$ . A specific loss function may be specifically selected based on an actual application scenario.

(5) Back propagation algorithm

A neural network may be used to correct a value of a parameter in an initial neural network model in a training process by using an error back propagation (back propagation, BP) algorithm, so that a reconstruction error loss of the neural network model becomes smaller. Specifically, an input signal is transferred forward until an error loss is output, and the parameter in the initial neural network model is updated based on back propagation error loss information, to make the error loss converge. The back propagation algorithm is an error loss-dominated back propagation motion, and is intended to obtain an optimal parameter, such as a weight matrix, in the neural network model.

In this application, when performing model training, a client may train a global model by using a loss function or a BP algorithm, to obtain a trained global model.

(6) Federated learning (federated learning, FL)

In a distributed machine learning algorithm, model training and algorithm update are collaboratively completed by using a plurality of clients such as mobile devices or edge servers, and a server on a premise that data does not flow out of a domain, to obtain a trained global model. This may be understood that, in a machine learning process, participants may use data from other parties to perform joint modeling. When all parties do not need to share a data resource, in other words, data is stored locally, joint data training is performed to establish a shared machine learning model.

First, a federated learning system provided in this application is described.

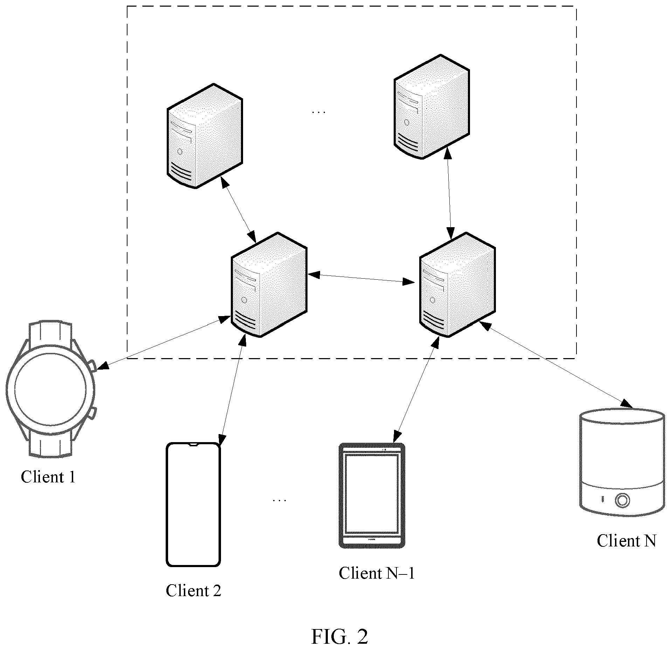

FIG. 2 is a schematic diagram of an architecture of a federated learning system according to this application. The system (or may be referred to as a cluster for short) may include a plurality of servers, and the plurality of servers may establish connections to each other, in other words, the servers may communicate with each other. Each server may communicate with one or more clients. The clients may be deployed in various devices, for example, deployed in a mobile terminal or a server. For example, the clients are a client 1, a client 2, ..., a client N-1, and a client N shown in FIG. 2.

Specifically, interaction between servers or between a server and a client may be performed through a communication network of any communication mechanism/communication standard. The communication network may be a wide area network, a local area network, a point-to-point connection or another manner, or any combination thereof. Specifically, the communication network may include a wireless network, a wired network, a combination of a wireless network and a wired network, or the like. The wireless network includes but is not limited to any one or more of a 5th generation mobile communication technology (5th-Generation, 5G) system, a long term evolution (long term evolution, LTE) system, a global system for mobile communication (global system for mobile communication, GSM) or a code division multiple access (code division multiple access, CDMA) network, a wideband code division multiple access (wideband code division multiple access, WCDMA) network, wireless fidelity (wireless fidelity, Wi-Fi), Bluetooth (Bluetooth), ZigBee (Zigbee), radio frequency identification (radio frequency identification, RFID), long range (Long Range, Lora) wireless communication, and near field communication (near field communication, NFC). The wired network may include an optical fiber communication network, a network composed of a coaxial cable, or the like.

Usually, the client may be deployed in various servers or terminals. The client mentioned below may also refer to a server or a terminal on which a client software program is deployed. The terminal may include a mobile terminal, a fixedly-installed terminal, or the like. For example, the terminal may specifically include a mobile phone, a tablet computer, a personal computer (personal computer, PC), a smart band, a sound system, a television, a smartwatch, or another terminal.

During federated learning, each server may deliver a to-be-trained model to a client that establishes a connection to the server. The client may train the model by using a locally stored training sample, and feed data of a trained model back to the server. After receiving one or more trained models fed back by one or more clients, the server may aggregate data of the received one or more models to obtain aggregated data that is equivalent to an aggregated model. After a stopping condition is met, a final model may be output to complete federated learning.

Usually, to resolve a problem of a long transmission delay caused because there is a relatively long distance between a client and a server, an intermediate server (referred to as an edge server in this application) is usually introduced between the server and the client, to form a multilayer architecture, that is, a client-edge server-cloud server architecture, so that a transmission delay between the client and the federated learning system is reduced by using the edge server.

Usually, in some common manners, the client may upload a trained local client model to the edge server for aggregation, the edge server uploads an aggregated edge server model to a cloud server, and the cloud server aggregates the received edge server model to obtain a final global model.

However, training data between clients is usually heterogeneous, and a global model obtained by simply performing averaging on client models does not support personalized characteristics of the clients. Consequently, the finally obtained global model has relatively poor adaptability to the client and has a weak generalization capability. In addition, edge servers in different areas may have specific models, and a global model obtained by performing de-averaging on only edge server models does not support personalized characteristics of the edge servers. Consequently, the finally obtained global model may not be applied to each edge server, a client connected to the edge server, and the like. In addition, the client and the server usually communicate with each other frequently, and a complete model is uploaded or delivered in each communication, resulting in a relatively large transmission amount.

Therefore, this application provides a federated learning method, to support a personalization training model of a client and a personalization update model of a server, and implement depersonalization processing of another device to some extent, to obtain a global model with a stronger generalization capability.

Specifically, a federated learning system to which the federated learning method provided in this application may be applied may include a plurality of topological relationships. For example, the federated learning system may include an architecture of two or more layers. The following describes some possible architectures by using examples.

1. Two-layer architecture

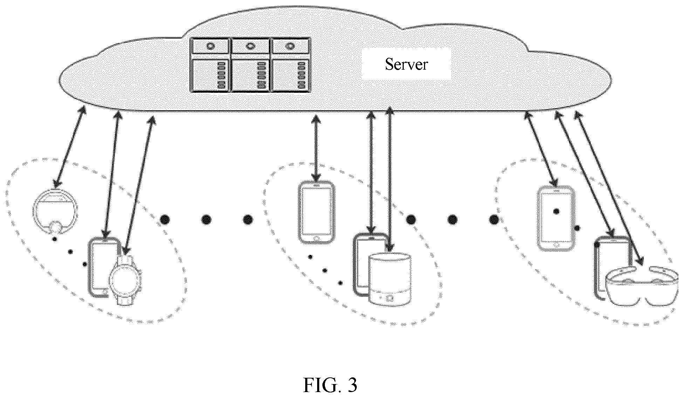

FIG. 3 is a schematic diagram of a structure of a federated learning system according to this application.
The federated learning system includes a two-layer architecture formed by a server and a client. The server may directly establish a connection to one or more clients.
In a federated learning process, the server delivers a global model to the one or more clients that have established a connection to the server; the client trains the received global model by using a locally stored training sample, and feeds a trained global model back to the server; and the server updates a locally stored global model based on the received trained global model, to obtain a final global model.

2. Three-layer architecture

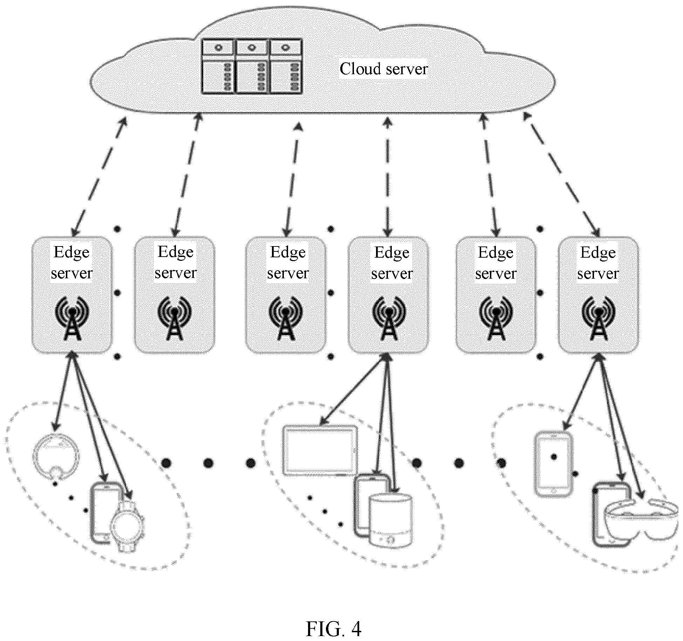

FIG. 4 is a schematic diagram of a structure of a federated learning system according to this application.
The federated learning system includes one or more cloud servers, one or more edge servers, and one or more clients, to form a cloud server-edge server-client three-layer architecture.
In the system, one or more edge servers are connected to a cloud server, and one or more clients are connected to an edge server.
In a process of performing federated learning, the cloud server delivers a locally stored global model to the edge server, and then the edge server delivers the global model to a client connected to the edge server. The client trains the received global model by using a locally stored training sample, and feeds a trained global model back to the edge server; and the edge server updates a locally stored global model based on the received trained global model, and feeds, back to the cloud server, a global model obtained after updating by the edge server, to complete federated learning.

3. Architecture of more than three layers

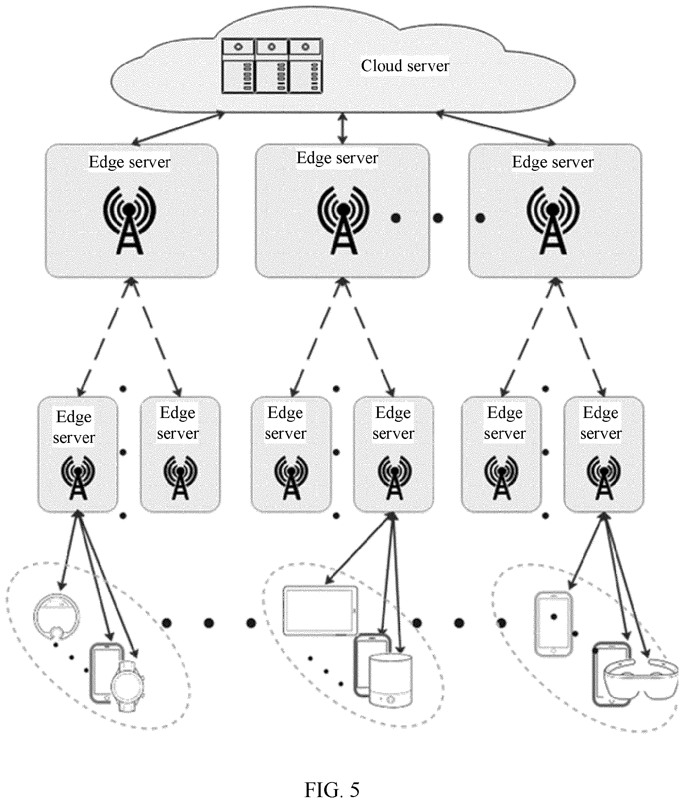

FIG. 5 is a schematic diagram of a structure of another federated learning system according to this application.

The federated learning system includes an architecture of more than three layers. One of the layers includes one or more cloud services, and a plurality of edge servers form an architecture of two or more layers. For example, one or more upstream edge servers form one layer of architecture, and each upstream edge server is connected to one or more downstream edge servers. Each edge server in a last layer of architecture formed by edge servers is connected to one or more clients, so that the clients form one layer of architecture.

In a federated learning process, a most upstream cloud server delivers a latest locally stored global model to a lower-layer edge server, and then the edge server delivers the global model layer by layer to a lower layer until the global model is delivered to a client. After receiving the global model delivered by the edge server, the client trains the received global model by using a locally stored training sample, and feeds a trained global model back to an upper-layer edge server. Then, after updating a locally stored global model based on the received trained global model, the upper-layer edge server may upload an updated global model to an upper-layer edge server of the edge server, and so on, until a second-layer edge server uploads the updated global model to the cloud server. The cloud server updates a local global model based on the received global model to obtain a final global model, to complete federated learning.

It should be noted that in this application, for each node in a federated learning architecture, a direction of transmitting data to a cloud server is referred to as upstream, and a direction of transmitting data to a client is referred to as downstream. For example, as shown in FIG. 3, the server is an upstream node of the client, and the client is a downstream node of the server. As shown in FIG. 4, the cloud server may be referred to as an upstream node of the edge server, the client may be referred to as a downstream node of the edge server, and so on.

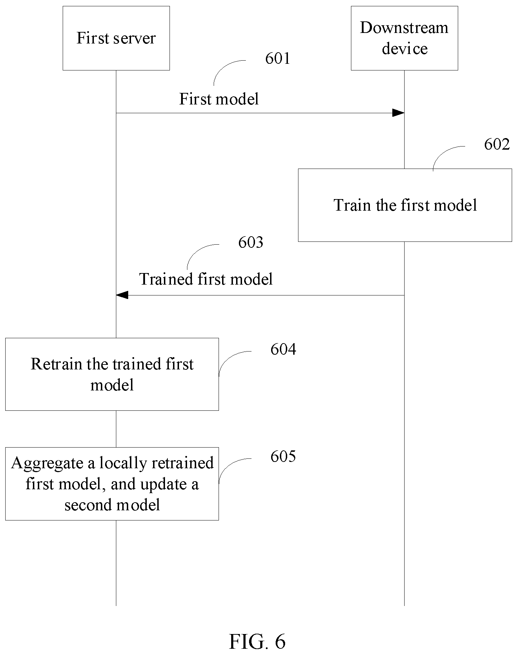

The foregoing describes the federated learning system provided in this application. The following describes detailed steps performed by devices in the federated learning system. FIG. 6 is a schematic flowchart of a federated learning method according to this application. Details are as follows:

601: A first server sends a first model to a downstream device.

The first server may be the server in the federated learning systems in FIG. 2 to FIG. 5. For example, the first server may be any one of the plurality of servers shown in FIG. 2, or may be any server in the two-layer architecture shown in FIG. 3, or may be any one of the cloud servers or the edge servers shown in FIG. 4, or may be any one of the cloud servers or the edge servers shown in FIG. 5. The downstream device may be a client or a next-layer edge server of the first server, and there may be one or more downstream devices. For example, if the first server establishes connections to a plurality of clients, the first server may send the first model to each client.

The first model may be a model locally stored in the first server, for example, a global model locally stored in a cloud server; or after receiving a model sent by another server, the first server may locally store the received model or update a locally stored model. Specifically, the first server may send a structure parameter (for example, a width, a depth, or a convolution kernel size of a neural network), an initial weight parameter, or the like of the first model to the downstream device. Optionally, the first server may further send, to the downstream device, a training configuration parameter, for example, a learning rate, an epoch quantity, a class in a security algorithm, or another parameter, so that a client that ultimately performs training can use the training parameter to train the first model.

For example, when the first server is a cloud server, the first model may be a global model stored in the cloud server. For ease of differentiation, the global model stored in the cloud server is referred to as a cloud-side model below.

For another example, when the first server is an edge server, the first model may be a local model stored in the edge server, or may be referred to as an edge server model. After receiving a model delivered by an upper-layer edge server or a cloud server, the edge server uses the received model as an edge server model or updates an existing edge server model, to obtain a new edge server model, and sends the new edge server model to the downstream device. It should be further noted that when the first server is an edge server and the downstream device is a client, the first server may directly deliver an edge server model (or referred to as a second model) to the client. When the first server is an edge server and the downstream device is a client, the first model in this step may be replaced with an edge server model.

In this embodiment of this application, the mentioned model, for example, the first model, the second model, or a third model, may specifically include a neural network such as a convolutional neural network (convolutional neural network, CNN), a deep convolutional neural network (deep convolutional neural network, DCNN), or a recurrent neural network (recurrent neural network, RNN). Specifically, a to-be-learned model may be determined based on an actual application scenario. This is not limited in this application.

Optionally, the first server may proactively send the first model to a downstream device connected to the first server, or may send the first model to the downstream device when the downstream device requests the first model. For example, if the downstream device is a client, and the first server is an edge server, the client may send a request message to the edge server to request to participate in federated learning. After the edge server receives the request message, if the edge server confirms that the client is allowed to participate in federated learning, the edge server may deliver the first model to the client. For another example, the client may send a request message to a cloud server to request to participate in federated learning. After receiving the request message and confirming that the client is allowed to participate in federated learning, the cloud server may deliver a locally stored cloud-side model to the edge server. The edge server updates a local first model based on the received model, and delivers an updated first model to the client.

602: The downstream device trains the first model.

After receiving the first model sent by the first server, the downstream device may train the first model to obtain a trained first model. Alternatively, after receiving the first model sent by the first server, the downstream device may update a locally stored model based on the received first model. For example, the downstream device updates the locally stored model in a manner such as weighted fusion or averaging, to obtain a new first model.

In a scenario, when the downstream device is an edge server, the first server may be an upper-layer edge server of the edge server, or a cloud server. After the first server delivers the first model to the edge server, the edge server may update a locally stored first model based on the first model, and deliver an updated first model to a downstream device of the edge server, for example, a client or a lower-layer edge server, until the first model is delivered to the client. Finally, the client trains the first model to obtain a trained first model.

In another scenario, when the downstream device is a client, the client may train the first model by using a locally stored training sample, to obtain a trained first model. For example, the client may be deployed in a mobile terminal, and the mobile terminal may collect a large amount of data in a running process. The client may use the collected data as a training sample to perform personalized training on the first model, to obtain a personalization model of the client.

In a possible implementation, if the downstream device is a client, a process in which the client (one first client in clients is used as an example) trains the first model may specifically include: The first client receives information about the first model sent by the first server; the first client trains the first model under a third sparsity constraint condition, to obtain a trained first model, where the third sparsity constraint condition includes a constraint formed by a function for reducing parameters in the first model; and the first client sends information about the trained first model to the first server, for example, a weight parameter and a gradient parameter of the trained model.

Therefore, in this implementation of this application, when training the model, the client may apply a sparsity constraint, so that a trained model has higher sparsity, and parameters of the finally obtained model are reduced. Therefore, during transmission of the model between the client and the server, fewer parameters can be transmitted compared with a model on which no sparsity constraint is applied, thereby reducing communication resources required for data transmission between the client and the server, and reducing communication load.

Optionally, a function that may be included in the third sparsity constraint condition may specifically include a norm of a vector or matrix of the first model; and the norm may specifically include an $l_0$ norm, an $l_1$ norm, an $l_p$ norm, an $l_{12}$ norm, an $l_{p2}$ norm, a continuous function obtained after $l_0$ norm transformation, a continuous function obtained after norm $l_1$ transformation, a continuous function obtained after $l_p$ norm transformation, a continuous function obtained after $l_{12}$ norm transformation, a continuous function obtained after $l_{p2}$ norm transformation, or the like; and $p \in (0,1)$.

Optionally, the first client may train the first model under constraints of the third sparsity constraint condition and a second distance constraint condition, to obtain a trained first model, where the second distance constraint condition includes a constraint formed by a similarity or a distance between the first model and a locally stored fourth model.

For example, a second distance constraint may be added to a loss function, and the second distance constraint may specifically include one or more of the following: a distance such as a Euclidean distance, a Minkowski distance (or referred to as a Minkowski distance), a Manhattan distance, a Chebyshev distance, a Minkowski distance, or a Mahalanobis distance, and a similarity such as mutual information, a cosine similarity, a Pearson correlation coefficient, an entropy function, or an inner product.

Therefore, in this implementation of this application, by applying a distance constraint, the client can learn of a difference between a locally stored model and a model delivered by the server, to obtain a personalized model that is adapted to a distribution characteristic of local data in the client, so that the finally obtained model can implement client personalization.

For ease of understanding, in some embodiments in the following, when the downstream device is a client, after receiving the first model, the client may update a locally stored client-side model based on the first model, for example, obtain a new client-side model through replacement, weighted fusion, or another manner; and perform training.

603: The downstream device feeds a trained first model back to the first server.

After training the first model to obtain the trained first model, the downstream device may feed the trained first model back to an upstream device.

When the downstream device is a client, the client may directly train the first model by using a locally stored training sample, to obtain the trained first model; and feed the trained first model back to the first server.

When the downstream device is a next-layer edge server of the first server, the edge server may update a locally stored first model based on the first model, and deliver an updated first model to a downstream device of the edge server, for example, a client or a lower-layer edge server, until the updated first model is delivered to the client. Finally, the client trains the first model to obtain a trained first model, and feeds the trained first model back to the upstream device. The upstream device may retrain the received first model to achieve an effect of retaining personalization of the upstream device; and a retrained first model is fed back to the upstream device until the first model is fed back to the first server.

It should be noted that, when the downstream device is an edge server, a trained model fed back by the downstream device may be referred to as a cloud-side model fed back by the edge server or an edge server model. When the downstream device is a client, a trained model fed back by the client may be referred to as a client-side model. Details are not described below.

604: The first server retrains the trained first model.

After receiving the trained first model fed back by the downstream device (which is directly referred to as the first model in this step to avoid redundancy), the first server may retrain the received first model to obtain a retrained first model. There may be one or more downstream devices. When there are a plurality of downstream devices, the first server may receive trained first models respectively fed back by the plurality of downstream devices, and retrain the plurality of trained first models to obtain a plurality of retrained first models.

Specifically, the downstream device may feed a gradient parameter of the trained first model back to the first server. After receiving the gradient parameter, the first server may perform model training based on the gradient parameter without using a training sample. In this way, the server can implement client depersonalization processing to some extent, and the server can adjust the first model to obtain a model with a stronger generalization capability.

Specifically, the first server may retrain at least one received first model under a first sparsity constraint condition, to obtain a retrained first model. The first sparsity constraint condition may include a constraint formed by a function for reducing parameters in the first model. For example, during retraining of the first model, the function for reducing parameters in the first model may be added to the loss function.

Optionally, a function that may be included in the first sparsity constraint condition may specifically include a norm of a vector or matrix of the first model; and the norm may specifically include an $l_0$ norm, an $l_1$ norm, an $l_p$ norm, an $l_{12}$ norm, an $l_{p2}$ norm, a continuous function obtained after $l_0$ norm transformation, a continuous function obtained after norm $l_1$ transformation, a continuous function obtained after $l_p$ norm transformation, a continuous function obtained after $l_{12}$ norm transformation, a continuous function obtained after $l_{p2}$ norm transformation, or the like; and $p \in (0,1)$.

Therefore, in this implementation of this application, a norm may be added to a loss function to perform sparsity processing on the first model, to reduce parameters in the first model. In this way, during transmission of the first model between the downstream device and the first server, compared with a model on which no sparsity processing is performed, fewer data needs to be transmitted, thereby reducing communication resources required for transmission, and improving transmission efficiency.

Optionally, the first server may retrain the at least one received first model under a constraint of a first distance constraint condition, to obtain a retrained first model. The first distance constraint condition may include a constraint formed by a similarity between the first model and a second model or a distance between the first model and the second model in vector space. The second model is a model locally stored in the first server. For example, a distance constraint may be added to the loss function, and the distance constraint may specifically include one or more of the following: a Euclidean distance, a Minkowski distance (or referred to as a Minkowski distance), a Manhattan distance, a Chebyshev distance, a Minkowski distance, a Mahalanobis distance, mutual information, a cosine similarity, a Pearson correlation coefficient, an entropy function, or the like.

Therefore, in this implementation of this application, the first model may be alternatively trained based on the distance or the similarity between the first model and the locally stored second model. In this way, a trained model that is finally obtained involves personalization of the upstream device and a personalized characteristic of the local model in the first server, and has a stronger generalization capability.

In an optional implementation, to implement depersonalization of the first model to some extent and retain personalization processing of the first model to make the first model have a stronger generalization capability, before retraining the first model, the first server may use noise to perturb the at least one received first model, to obtain a new first model; and then train the new first model.

For ease of understanding, in the following implementations, if the first server is an edge server, the second model may be referred to as an edge server model; and if the first server is a cloud server, the second model may be referred to as a cloud-side model. Details are not described below again.

605: The first server aggregates at least one locally retrained first model, and updates the second model.

After retraining the at least one received first model, the first server may aggregate the locally retrained first model, and update the locally stored second model based on an aggregation result, to obtain an updated second model.

Specifically, a manner of aggregating the at least one first model may include a manner such as averaging, weighted summation, or weighted fusion with the local second model. Specifically, the aggregation manner may be based on an actual application scenario, and is not limited in this application.

Therefore, in this implementation of this application, the server may locally retrain the received model to perform personalization processing on the received model by retaining a data distribution characteristic of the server. In this way, a finally obtained model can adapt to a data distribution structure of the downstream device, and can also adapt to data distribution of the server, thereby improving a generalization capability of the finally obtained model in the federated learning system. The client and the server perform hierarchical training, so that a difference between data in clients and a data distribution difference between servers can be fully used to implement depersonalization processing to some extent and adapt to a personalized characteristic of each device to some extent. This helps improve output accuracy of a trained client-side model or an edge server model.

In a possible implementation, if the first server is an edge server, and there is a cloud server at an upper layer of the first server, the method may further include: Before sending the first model to the downstream device, the first server may further receive a third model delivered by the cloud server (or referred to as a cloud-side model), and update the locally stored second model or the first model by using the third model. After the at least one first model is aggregated to obtain the updated second model, the third model may be trained to obtain an updated third model. Therefore, in this implementation of this application, the cloud-side model delivered by the cloud server may be trained by the edge server, so that a personalized characteristic of the edge server can be fused in the cloud-side model. Even if data in devices in the federated learning system is heterogeneous, a model with a strong adaptability can be obtained.

For example, after receiving the cloud-side model sent by the cloud server (that is, the third model), the edge server may update a local edge server model (that is, the second model) based on the cloud-side model, and then deliver a local edge server model to the client. The client trains the received model by using a local training sample, and feeds a trained client-side model (that is, a first model fed back by the client) back to the edge server. Then, the edge server may update the edge server model by using the trained client-side model, update a locally stored cloud-side model, and feed an updated cloud-side model back to the cloud server, so that the cloud server updates a local cloud-side model based on the updated cloud-side model.

Optionally, when training the third model, the first server may train the third model under a constraint of a second sparsity constraint condition. The second sparsity constraint condition includes a constraint formed by a function used for reducing parameters in the third model. This is similar to the foregoing third sparsity condition, and details are not described herein again.

If the trained third model meets a first preset condition, the first server may send information about the trained third model to the upstream device, for example, a weight parameter or a gradient parameter of the trained third model, so that the upstream device may have the information about the updated third model.

If the trained third model does not meet the first preset condition, the first server may send the updated second model to the downstream device to complete one round of iteration again, to obtain an updated third model after iteration performed again. This is equivalent to sending the updated second model to the downstream device as a new first model, so that the downstream device can train the new first model, that is, repeat steps 601 to 605 until a third model that meets a requirement is obtained.

Specifically, the first preset condition may be set based on an actual application scenario. For example, the first preset condition may be set to that output precision of the trained third model exceeds a first threshold, or average output precision of the trained third model exceeds a second threshold, or a quantity of update times of the third model reaches a preset quantity of times. Details are not described herein again.

Optionally, the first server may send information about the updated second model to the upstream device, so that the upstream device updates the third model based on the information about the updated second model, thereby reducing workload of the first server. A specific step of training the third model by the upstream device is similar to a process of training the third model by the first server, and details are not described herein again.

The foregoing describes the federated learning procedure provided in this application. The following describes in more detail the federated learning method provided in this application with reference to a more specific architecture of the federated learning system. For a two-layer architecture, refer to FIG. 6. A downstream device in the two-layer architecture may be replaced with a client. The following uses an example to describe an overall process in which a three-layer architecture or an architecture of more than three layers is used.

1. Three-layer architecture

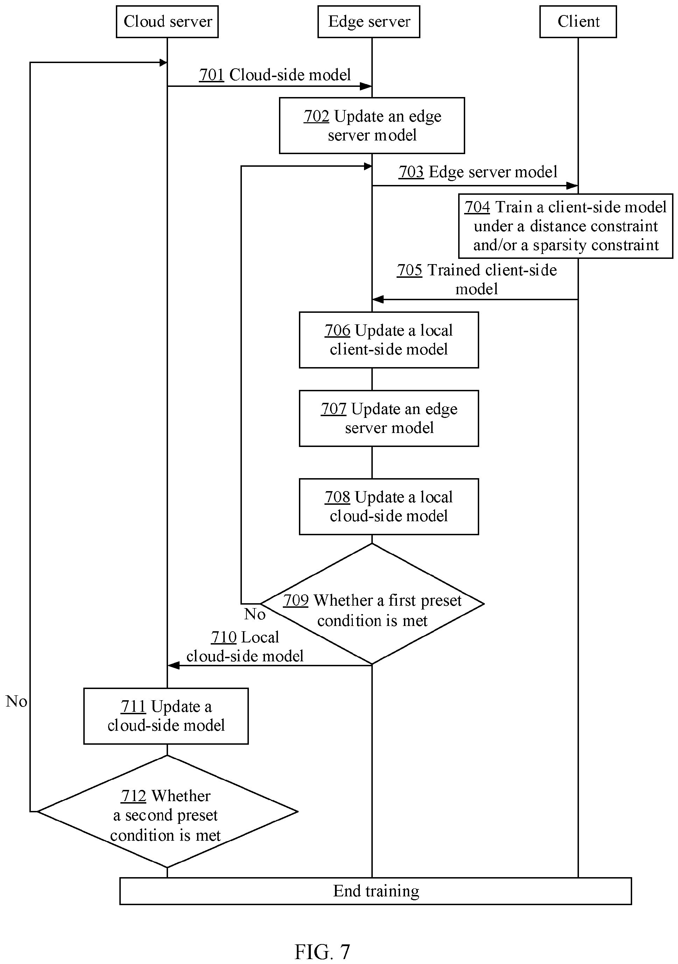

FIG. 7 is a schematic flowchart of a federated learning method according to this application. Details are as follows:

701: A cloud server sends a cloud-side model to an edge server.

The cloud-side model is a to-be-trained global model stored in the cloud server. Specifically, the cloud server may send, to the edge server, a parameter such as a structure parameter (for example, a width, a depth, or a convolution kernel size of the model), a weight parameter, or a gradient parameter of the cloud-side model.

If current iteration is iteration that is performed for the first time, the global model is an initialized to-be-trained model. If the current iteration is not iteration that is performed for the first time, the cloud-side model may be obtained by updating a model uploaded by an edge server in previous iteration.

It should be understood that if the first server in FIG. 6 is a cloud server, the cloud-side model is the foregoing first model, and may be understood as a global model stored and delivered by the cloud server.

It should be further understood that, in the federated learning system provided in this application, there may be one or more edge servers. If there are a plurality of edge servers, the cloud server may send a cloud-side model to each of the plurality of edge servers. In addition, the cloud service may proactively deliver the cloud-side model to the edge server, or may send the cloud-side model to each edge server when the edge server requests the cloud-side model. A specific manner of sending the cloud-side model may be adjusted based on an actual application scenario. This is not limited in this application.

702: The edge server updates an edge server model.

The edge server updates the edge server model based on the received cloud-side model. Specifically, the edge server may directly replace a locally stored edge server model with the cloud-side model to obtain a new edge server model; or the edge server may perform aggregation such as averaging or weighted fusion on the received cloud-side model and a locally stored edge server model, to obtain a new edge server model.

For example, each edge server needs to update a local cloud-side model $w_i$ of the edge server and each edge server model $y_i$ at the beginning of each round of update by using a global model delivered by the cloud server, that is, a cloud-side model w, where $i = 1, 2, ... , N$. For example, an $i^{th}$ edge server uses the global model w from the cloud server to replace an edge server model, that is $y_i$ = w; and replace a local cloud-side model, that is, $w_i$ = w.

703: The edge server sends an edge server model to a client.

After updating the locally stored edge server model, the edge server may deliver a latest edge server model to the client, so that the client receives the latest edge server model and performs training.

It should be noted that the edge server may proactively deliver the edge server model to the client, or may deliver the edge server model to the client when the client requests the edge server model. A specific manner of delivering the edge server model is determined based on an actual application scenario. This is not limited in this application.

In a possible scenario, the edge server may locally store a client-side model. After obtaining the latest edge server model, the edge server may update the client-side model based on the latest edge server model. For example, the latest edge server model is directly used as the client-side model, or weighted fusion is performed on the latest edge server model and the client-side model to obtain a new client-side model or the like. Specifically, a manner of updating the client-side model may be adjusted based on an actual application scenario. If the edge server locally stores the client-side model, the edge server may directly deliver the client-side model to the client. To be specific, the edge server model in this step may be replaced with the client-side model.

704: The client trains the client-side model under a distance constraint and/or a sparsity constraint.

After receiving the edge server model delivered by the edge server, the client may update a local client-side model based on the edge server model, and train the client-side model under the distance constraint and the sparsity constraint by using a locally stored training sample, to obtain a trained client-side model.

Specifically, the sparsity constraint may be a constraint formed by a third sparsity constraint condition, and the sparsity constraint may be used for reducing parameters in the client-side model to obtain a model after sparsity processing, to reduce a communication amount of communication between the client and the edge server.

For example, there may be a plurality of clients. A received edge server model $y_i$ (where $i = 1, 2, ..., N$) is used to update each client model $\theta_{i,j}$ where $i = 1, 2, ..., N,$ and $j = 1, 2, ... , J_i$. Then, the client uses the locally stored training sample to further perform iteration under a sparsity constraint to update the client-side model $\theta_{i,j}$ where $i = 1, 2, ... , N,$ and $j = 1, 2, ..., J_i$. For example, an update manner is represented as:

$$\theta_{i,j} = \arg \min_{\theta_{i,j} \in \mathbb{R}^d} \{ \ell_{i,j}(\theta_{i,j}) + \gamma_1 \phi_\rho(\theta_{i,j}) \}$$

$\theta_{i,j}$ represents a client model of a $j^{th}$ client corresponding to an $i^{th}$ edge server, $\ell_{i,j}(\cdot)$ is a loss function in the $j^{th}$ client managed by the $i^{th}$ edge server. A specific form of the loss function may be any function used to measure a degree of a difference between a predicted value and a true value of a neural network model, for example, a mean square error loss or a cross entropy loss. The loss function is selected based on an actual application scenario and a demand, so that the neural network model can be trained more flexibly.

$\phi_\rho(\theta_{i,j})$ is a function corresponding to a sparsity constraint; and $\gamma_1$ is a hyperparameter and represents a weight for adjusting each constraint function. In this embodiment of this application, the hyperparameter may be any non-negative real number. For example, when $\gamma_1 = 0$, it indicates that a weight of a sparsity constraint is 0, in other words, sparsity processing is not required for parameters in a training process. This may be usually applied to a scenario in which a neural network model is relatively small, transmission and communication costs are relatively low, and sparsity processing is not required for model parameters.

Terms "$i^{th}$", "$j^{th}$", and the like herein are used to distinguish similar objects and are not necessarily used to describe a particular order or sequence. It should be understood that such terms are interchangeable where appropriate, and this is merely a manner used distinguishing between objects of a same property during description of the objects in embodiments of this application.

For example, if a quantity of parameters of the client-side model is $d$, and a specific form of a sparsity constraint $\phi_\rho(\cdot)$ may be expressed as:

$$\phi_\rho(x) = \rho \sum_{n=1}^{d} \log \cosh\left(\frac{x_n}{\rho}\right)$$

The sparsity constraint may be alternatively replaced with a function that may be used to guide variable sparsity, for example, an $l_0$ norm, an $l_1$ norm, an approximation of the $l_0$ norm, an approximation of the $l_1$ norm, a mixed norm of $l_0$ and $l_p$, or a mixed norm of $l_1$ and $l_p$.

Optionally, during training of the client-side model, a distance constraint, that is, a distance or a similarity between the received client-side model and a locally stored client-side model (or referred to as a fourth model), may be applied.

For example, the client-side model may be represented as: $\theta_{i,j} =$

$$arg \min_{\theta_{i,j} \in \mathbb{R}^d} \left\{ \ell_{i,j}(\theta_{i,j}) + \frac{\lambda_1}{2} \left\| \theta_{i,j} - y_i \right\|^2 \right\}$$

$\lambda_1$ is a hyperparameter, and represents a weight of the distance constraint. Herein, an $l_2$ norm of a distance between $\theta_{i,j}$ and $y_i$ is used as an example for description. In an actual application scenario, the norm may be replaced with any other function for measuring a similarity or a distance between two variables, for example, a Euclidean distance, a Mahalanobis distance, mutual information, a cosine similarity, an inner product, or a norm. An appropriate function may be determined based on the actual application scenario. This is not limited in this application.

For another example, the foregoing 2 norm may be replaced by an inner product. For example, the client-side model may be represented as:

$$\theta_{i,j} = arg \min_{\theta_{i,j} \in \mathbb{R}^d} \left\{ \ell_{i,j}(\theta_{i,j}) + \frac{\lambda_1}{\|y_i\|} <\theta_{i,j}, y_i> \right\}$$

For example, after the distance constraint and the sparsity constraint are used, an updated the client-side model may be represented as:

$$\theta_{i,j} = arg \min_{\theta_{i,j} \in \mathbb{R}^d} \left\{ \ell_{i,j}(\theta_{i,j}) + \frac{\lambda_1}{2} \left\| \theta_{i,j} - y_i \right\|^2 + \gamma_1 \phi_\rho(\theta_{i,j}) \right\}$$

Correspondingly, the 2 norm used herein for updating the client-side model may alternatively be replaced by another function, for example, an inner product. For example, the updated client-side model may be represented as:

$$\theta_{i,j} = arg \min_{\theta_{i,j} \in \mathbb{R}^d} \left\{ \ell_{i,j}(\theta_{i,j}) + \frac{\lambda_1}{\|y_i\|} <\theta_{i,j}, y_i> + \gamma_1 \phi_\rho(\theta_{i,j}) \right\}$$

In addition, when the client trains the client-side model, a manner of updating the client-side model may be specifically a gradient descent method, a Newton method, or an optimization algorithm that may be used in machine learning, for example, an adaptive moment estimation (adaptive moment estimation, Adam) method.

For example, in an implementation, after a $j^{th}$ client managed by an $i^{th}$ edge server receives an edge server model $y_i$ delivered by the edge server, the client may select the gradient descent optimization algorithm to update the client model $\theta_{i,j}$.

$$\theta_{i,j}^0 = y_i$$

$$\theta_{i,j}^{k+1} = \theta_{i,j}^k - \eta_1\big[\nabla\ell_{i,j}(\theta_{i,j}^k) + \lambda_1(\theta_{i,j} - y_i) + \gamma_1\nabla\phi_\rho(\theta_{i,j})\big]$$

$\eta_1$ represents a learning rate in the gradient descent optimization algorithm or a step length of each update, and a final personalization model $\theta_{i,j}$ in current update is obtained after iteration is performed for $k$ times. In an actual training process, not all data is usually used at a same time to calculate $\ell_{i,j}(\theta_{i,j}^k)$, and a batch form may be used. During each iteration, data $\mathcal{D}_{i,j}$ in one batch (batch) is used to calculate a loss function and update a gradient value.

$$\theta_{i,j}^{k+1} = \theta_{i,j}^k - \eta_1\big[\nabla\tilde{\ell}_{i,j}(\theta_{i,j}^k, \mathcal{D}_{i,j}) + \lambda_1(\theta_{i,j} - y_i) + \gamma_1\nabla\phi_\rho(\theta_{i,j})\big]$$

$$\nabla\tilde{\ell}_{i,j}(\theta_{i,j}^k, \mathcal{D}_{i,j}) = \frac{1}{|\mathcal{D}_{i,j}|}\sum_{Z_{i,j}\in\mathcal{D}_{i,j}}\nabla\ell_{i,j}(\theta_{i,j}^k, Z_{i,j})$$

$Z_{i,j}$ represents a data set in a batch (batch) in a data set stored by the $j^{th}$ client managed by the $i^{th}$ edge server, and is a set of training data in $\mathcal{D}_{i,j}$, where $Z_{i,j} = (X_{i,j}, Y_{i,j})$; $X_{i,j}$ represents input data used for training a neural network; and $Y_{i,j}$ represents a real label corresponding to the input data $X_{i,j}$.

In this implementation of this application, due to the distance constraint, the client can search for a personalization model that adapts to a local data set in the client and that is different from an edge server model delivered by the edge server, to alleviate difficulty in federated learning and training caused by heterogeneity of data in different clients in federated learning. The sparsity constraint can effectively reduce a quantity of non-zero parameters of the personalization model of the client, to reduce calculation and storage pressure of a user side and reduce costs of communication between the client and the edge server.

705: The client sends a trained client-side model to the edge server.

After training the client-side model, the client may feed information about the updated client-side model back to the edge server. For example, after performing training to obtain an updated sparse client-side model $\theta_{i,j}$, where $i = 1, 2, ..., N$, and $j = 1, 2, ..., J_i$, each client may upload the updated client-side model to a corresponding edge server. Specifically, the client may upload a weight parameter, a gradient parameter, or the like of the updated client-side model.

706: The edge server updates a local client-side model.

Each client uploads the updated sparse client-side model $\theta_{i,j}$ to the corresponding edge server, where $i = 1, 2, ..., N$, and $j = 1, 2, ..., J_i$; and each edge server uses the sparse client model $\theta_{i,j}$ uploaded by the client, to perform calculation to obtain an edge server model $y_{i,j}$ corresponding to the edge server.

Specifically, the edge server may retrain the received client-side model. Because data of each client may be heterogeneous data, models obtained by the clients through training by using local data are also greatly different, and an effect of directly performing aggregation is not good. In the manner provided in this application, the edge server may retrain a model (local client-side model) from each client, to eliminate a difference between the models to some extent while retaining personalization of the local client-side models. In this way, a model obtained by the edge server through aggregation has higher precision, and can be generalized to more types of data, thereby improving precision and a generalization capability of the model obtained by the edge server through aggregation.

Optionally, in a process of retraining the received client-side model, the edge server may apply a sparsity constraint to perform training. For example, similar to a case in which the sparsity constraint is used by the client to perform training, a client-side model may be represented as:

$$y_{i,j} = \arg\min_{y_i\in\mathbb{R}^d}\{y\phi_\rho(\theta_{i,j})\}, j = 1, 2, ..., J_i$$

$y$ is a hyperparameter, and represents a weight of a sparsity constraint $\phi_\rho(\theta_{i,j})$.

Optionally, in a process in which the edge server retrains the received client-side model, a distance constraint may alternatively be applied for training. The distance constraint may include a distance or a similarity between a locally stored edge server model and the received client-side model, or may include a distance or a similarity between a locally stored edge server model and the cloud-side model. For example, a $J_i$ local client-side model $y_{i,j}$ obtained by the $i^{th}$ edge server through calculation may be represented as:

$$y_{i,j} = \arg\min_{y_i \in \mathbb{R}^d} \left\{ \frac{\lambda_1}{2} \|\theta_{i,j} - y_i\|^2 + \frac{\lambda_2}{2} \|y_i - w_i\|^2 + y\phi_\rho(\theta_{i,j}) \right\}, j = 1, 2, \dots, J_i$$

The following is obtained through solving:

$$y_{i,j} = \frac{\lambda_1 \theta_{i,j} + \lambda_2 w_i}{\lambda_1 + \lambda_2}$$

$\theta_{i,j}$ represents a sparse client-side model uploaded by a $j$th client managed by the edge server, and $w_i$ represents a current local cloud-side model stored by the edge server. It should be noted that the 2 norm herein may alternatively be replaced with another function, for example, an inner product or a Euclidean distance. The 2 norm may specifically be adjusted based on an actual application scenario.

Optionally, before the client-side model is trained, specific noise may be used to perform perturbation processing on the client-side model $\theta_{i,j}$ to obtain a new client-side model $\theta_{i,j}$. Then, the new client-side model $\theta_{i,j}$ is retrained. In this way, the new client-side model can be obtained through perturbation.

Therefore, in this embodiment, the edge server may retrain, based on the sparsity constraint or the distance constraint, the sparse model uploaded by the client, so that the edge server can keep a difference between the client-side model and the edge server within an appropriate range. This avoids an excessively large or small difference, and implements depersonalization processing on the client to some extent to obtain a model in which a personalized characteristic of the edge server is added and improve a generalization capability of the model. In addition, parameters in the model are reduced by using the sparsity constraint, to reduce a communication amount of transmission between the edge server and the cloud server or between the edge server and the client, and reduce communication costs.

707: The edge server updates an edge server model.

After obtaining the local client-side model $y_{i,j}$, the edge server may use the client-side model $y_{i,j}$ to update an edge server model $y_i$.

In a possible implementation, there may be a plurality of client-side models $y_{i,j}$, and the $i$th edge server uses all the local client-side models $y_{i,j}$, where $j = 1, 2, \dots, J_i$, to perform calculation on the edge server model $y_i$.

$$y_i = \frac{1}{J_i} \sum_{j=1}^{J_i} y_{i,j}$$

Optionally, sampling may be first performed on the local client-side models, and then aggregation may be performed to obtain a new edge server model $y_i$.

Therefore, in this embodiment, personalized training of the edge server model enables different edge servers to train different networks based on clients managed by the edge servers. The edge server model may not be directly used to aggregate a global model, thereby improving performance of a trained neural network, and improving output accuracy of a global model in federated learning.

708: The edge server updates a local cloud-side model.

After updating the edge server model, the local cloud-side model may be updated by using the edge server model.

A specific update manner may be replacing the local cloud-side model with the edge server model, or performing weighted fusion on the edge server model and the local cloud-side model, or updating the local cloud-side model by using a sparsity constraint and/or a distance constraint, or the like. Specifically, the update manner may be adjusted based on an actual application scenario.

For example, in this embodiment of this application, a local cloud-side model $w_i$ of the $ith$ edge server may be updated by using a gradient descent method, and a derivative of $F_{i,j}(\cdot)$ with respect to w may be obtained:

$$\nabla F_{i,j}(w) = \lambda_2(w - y_i) + \gamma_2 \nabla \phi_\rho(w)$$

Therefore, $w_i$ is updated based on a learning rate (update step size) $\eta_2$:

$$w_i \leftarrow w_i - \eta_2 \left[ \lambda_2 (w_i - y_i) + \gamma_2 \nabla \phi_\rho (w_i) \right]$$

Due to the sparsity constraint $\phi_\rho(w_i)$, a quantity of non-zero parameters becomes increasingly small. This can effectively reduce communication costs required for each parameter transmission performed by the edge server. For the sparsity constraint, in addition to $\phi_\rho(\cdot)$, a more appropriate sparsity guidance function may be flexibly selected based on an actual scenario. For example, a mixed norm is used to guide parameter group/block sparsity. Specifically, the sparsity constraint may be adjusted based on an actual application scenario.

709: The edge server determines whether an updated local cloud-side model meets a first preset condition; and if yes, performs step 710; or if no, performs step 703.

In each round of iteration between the edge server and the client, after updating the local cloud-side model, the edge server may determine whether the updated local cloud-side model meets the first preset condition. If the updated local cloud-side model meets the first preset condition, the edge server may send the locally stored cloud-side model to the server, that is, perform step 710. If the updated local cloud-side model does not meet the first preset condition, the edge server may continue to deliver, to the client, a latest edge server model obtained in step 707, so that the client retrains the latest edge server model by using the locally stored training sample, that is, repeatedly performs step 703 to step 709.

Specifically, the first preset condition may include but is not limited to one or more of the following: a quantity of iteration training times reaches a preset quantity of times, that is, a quantity of execution times of step 703 to step 709 reaches the preset quantity of times, output precision of the edge server model or the cloud-side model exceeds a first threshold, average precision of the edge server model or the cloud-side model exceeds a second threshold, a parameter change value of the edge server model or the cloud-side model between a plurality of iterations is less than a preset change value, and the like.

Therefore, in this implementation of this application, after each round of iteration meets a termination condition, an obtained local cloud-side model may be sent to the cloud server, so that the cloud server can obtain a cloud-side model with a stronger generalization capability, and update a cloud-side model in the cloud server based on the obtained cloud-side model; and an obtained cloud-side model can adapt to a data structure or data distribution difference between devices (for example, clients) in the federated learning system, and has a strong generalization capability.

In addition, optionally, after updating the edge server model, the edge server may not update the local cloud-side model. In 709, the edge server may determine whether the updated edge server model meets the first preset condition. If the updated edge server model meets the first preset condition, the edge server may send the local edge server model to the cloud server; and the cloud server performs step 708.

710: The edge server sends a local cloud-side model to the cloud server.

After the edge server determines that the updated local cloud-side model meets the first preset condition, if the edge server performs step 708, the edge server may feed the updated locally stored cloud-side model back to the cloud server. Specifically, the edge server may feed a weight parameter, a gradient parameter, or the like of the updated cloud server model back to the cloud server.

711: The cloud server updates a cloud-side model.

After receiving the cloud-side model sent by the edge server, the cloud server may update a locally stored cloud-side model by using the received cloud-side model.

Usually, if the cloud server receives only a cloud-side model uploaded by one edge server, the cloud server may replace the locally stored cloud-side model with the cloud-side model, or perform weighted fusion or the like on the received cloud-side model and the locally stored cloud-side model.

The following describes several update manners by using examples.

In an implementation, a new global model, that is, a cloud-side model w, is obtained by performing averaging on cloud-side models $w_i$ uploaded by all edge servers.

$$w = \frac{1}{N} \sum_{i=1}^{N} w_i$$

Optionally, the cloud server may obtain the following cloud-side model by performing weighted summation on the local cloud-side models uploaded by all the edge servers:

$$w = \frac{1}{N} \sum_{i=1}^{N} \alpha_i w_i$$

$$\sum_{i=1}^{N} \alpha_i = 1$$

The weight $\alpha_i$ may be determined by a quantity of clients corresponding to each edge server, may be determined by a size of a data set stored in a client managed by each edge server, may be determined by recognition accuracy of a personalization model of each edge server, or may be in another form. This is not limited in embodiments of this application.

In another implementation, the cloud server may obtain a new global model through aggregation based on a current global model. An aggregation manner is represented as follows:

$$w \leftarrow (1 - \beta)w + \beta \frac{1}{N} \sum_{i=1}^{N} w_i$$

$\beta > 0$. A specific value thereof may be set in advance.

In addition, sampling may be first performed on a local model uploaded by each edge server, and then aggregation is performed to obtain a new global model.

Therefore, in this implementation of this application, the cloud server may aggregate the received model to update the cloud-side model, that is, a global model, based on an aggregation result.

712: The cloud server determines whether an updated cloud-side model meets a second preset condition; and if yes, ends training; or if no, continues to perform step 701.

The second preset condition may include one or more of the following: a global model of the cloud server converges, an edge server model converges, a client model converges, a quantity of cycles reaches a predetermined quantity of times, output accuracy of the global model of the cloud server reaches a threshold, or the like.

A quantity of iteration training times reaches a specific quantity of times, output precision of the edge server model or the cloud-side model exceeds a third threshold, average precision of the edge server model or the cloud-side model exceeds a fourth threshold, a parameter change value of the edge server model or the cloud-side model between a plurality of iterations is less than a specific change value, or the like.

After training is completed, a final sparse global model w is obtained. The global model is applicable to an edge server model $y_i$ of each edge server, where $i = 1, 2, ..., N$; is applicable to a sparse client model $\theta_{i,j}$ of each client, where $i = 1, 2, ..., N$, and $j = 1, 2, ..., J_i$; and has a relatively strong generalization capability.

For example, for the three-layer architecture, in an overall federated learning process in which the three-layer architecture is used, for example, the client-edge server-cloud server framework may include $N$ edge servers. An $i^{th}$ edge server manages $J_i$ clients, and a quantity of parameters of a neural network model is $d$. In this case, a mathematical expression of a hierarchical personalized federated learning problem is as follows:

$$\min_{w \in \mathbb{R}^d} \left\{ F(w) \triangleq \frac{1}{N} \sum_{i=1}^{N} F_i(w) \right\}$$

$$F_i(w) \triangleq \frac{1}{J_i} \sum_{j=1}^{J_i} F_{i,j}(w)$$

$$F_{i,j}(w) = \min_{y_i \in \mathbb{R}^d, \theta_{i,j} \in \mathbb{R}^d} \left\{ \ell_{i,j}(\theta_{i,j}) + \frac{\lambda_1}{2} f_1(\theta_{i,j}; y_i) + \frac{\lambda_2}{2} f_1(y_i; w) + \gamma_1 f_2(\theta_{i,j}) + \gamma_2 f_2(w) \right\}$$

$f_1(\cdot)$ represents a distance constraint function, and a specific form of the distance constraint function may be any other function for measuring a similarity or a distance between two variables, for example, a Euclidean distance, a Mahalanobis distance, mutual information, a cosine similarity, or a norm. $f_1(\cdot)$ has two independent variables. It should be noted that $f_1(\cdot)$ may directly act on the two independent variables, and may also act on a transform of the two independent variables, for example, transposition, translation, or rotation. This is not exhaustive herein. $f_2(\cdot)$ represents a sparsity constraint function, and a specific form of the sparsity constraint function may be any function that may be used to guide variable sparsity, for example, an $l_0$ norm, an $l_1$ norm, an approximation of the $l_0$ norm, an approximation of the $l_1$ norm, a mixed norm of $l_0$ and $l_p$, or a mixed norm of $l_1$ and $l_p$. $\lambda_1$, $\lambda_2$, $\gamma_1$, and $\gamma_2$ are hyperparameters, and are used to adjust a weight of each constraint function. In this embodiment of this application, the hyperparameters may be any non-negative real numbers. For example, when $\gamma_1 = \gamma_2 = 0$, it indicates that a weight of a sparsity constraint is 0, in other words, sparsity processing is not required for parameters in a training process. This case may be applied to a scenario in which a neural network model is relatively small, transmission and communication costs are relatively low, and sparsity processing is not required for model parameters. $w$ represents a cloud-side model, $\theta_{i,j}$ represents a personalized client-side model of a $j$th client corresponding to an $i$th edge server, and $y_i$ is a personalized edge server model of the $i$th edge server.

$\ell_{i,j}(\cdot)$ represents a loss function in the $j$th client managed by the $i$th edge server. A specific form of the loss function may be any function used to measure a degree of a difference between a predicted value and a true value of a neural network model, for example, a mean square error loss or a cross entropy loss. The loss function is selected based on an actual application scenario and demand, so that the neural network model can be trained more flexibly.

In this embodiment of this application, a description is provided by using a case in which a distance constraint function $f_1(\cdot)$ is an $l_2$ norm, and a sparsity constraint function $f_2(-)$ is an approximate function $\phi_\rho(\cdot)$ of the $l_1$ norm.

$$\phi_\rho(x) = \rho \sum_{n=1}^{d} \log\left(\frac{exp\left(\frac{x_n}{\rho}\right) + exp\left(-\frac{x_n}{\rho}\right)}{2}\right) = \rho \sum_{n=1}^{d} \log\cosh\left(\frac{x_n}{\rho}\right)$$

$x_n$ represents an $n$ element of $x$. In this case, a mathematical expression of $F_{i,j}(w)$ is as follows:

$$F_{i,j}(w) = \min_{y_i \in \mathbb{R}^d, \theta_{i,j} \in \mathbb{R}^d} \left\{ \ell_{i,j}(\theta_{i,j}) + \frac{\lambda_1}{2}\|\theta_{i,j} - y_i\|^2 + \frac{\lambda_2}{2}\|y_i - w\|^2 + \gamma_1\phi_\rho(\theta_{i,j}) + \gamma_2\phi_\rho(w) \right\}$$

The 2 norm herein may be alternatively replaced by another function, for example, an inner product or a Euclidean distance. For example, a mathematical expression of $F_{i,j}(w)$ after the 2 norm is replaced with an inner product is as follows:

$$F_{i,j}(w) = \min_{y_i \in \mathbb{R}^d, \theta_{i,j} \in \mathbb{R}^d} \left\{ \ell_{i,j}(\theta_{i,j}) + \frac{\lambda_1}{\|y_i\|} <\theta_{i,j}, y_i> + \frac{\lambda_2}{\|w\|} <y_i, w> + \gamma_1\phi_\rho(\theta_{i,j}) + \gamma_2\phi_\rho(w) \right\}$$

Therefore, in this implementation of this application, when updating a model, the edge server may train the model, and update the model based on a learning rate, a gradient parameter, or the like, so that an edge server model has more personalized characteristics of the edge server, and an output effect of the edge server model is improved. By using the sparsity constraint and/or the distance constraint, the edge server model has a personalized characteristic of an edge service, and client depersonalization is implemented to some extent, thereby improving a generalization capability of a finally obtained model. Compared with a manner in which aggregation is performed on only a received model, in this application, the edge server model is updated in a training manner, so that personalization processing on the edge server model can be implemented, and a personalized characteristic of the edge server is retained. In this way, the edge server model can adapt to more devices, thereby improving a generalization capability of the model. In addition, when the client or the edge server trains a model, a quantity of parameters in the model is reduced based on a sparsity constraint, so that fewer communication resources are required for model transmission between the client and the edge server or between the edge server and the cloud server, thereby reducing communication costs.

2. Architecture of more than three layers

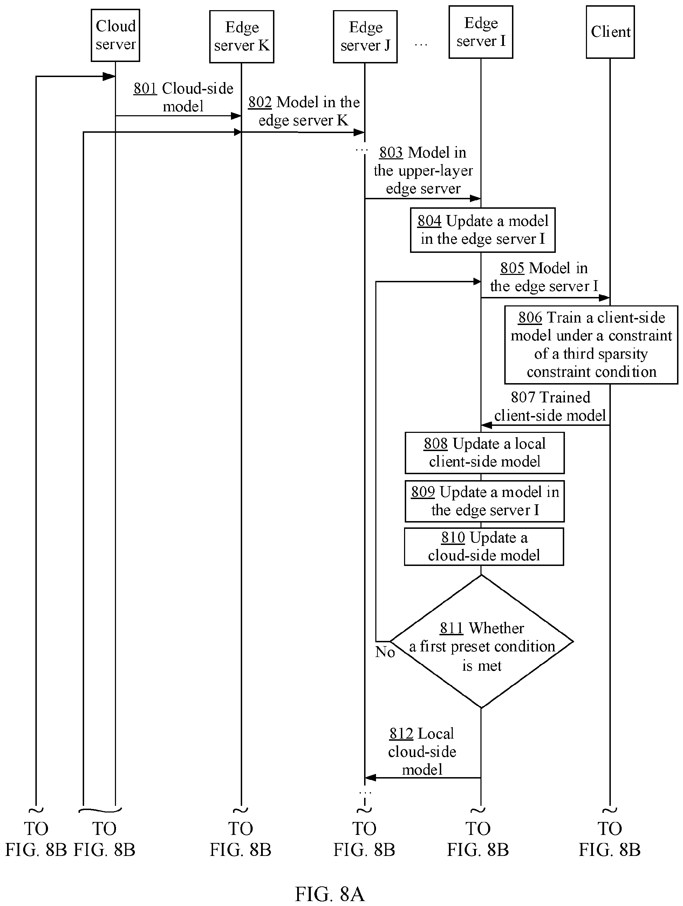

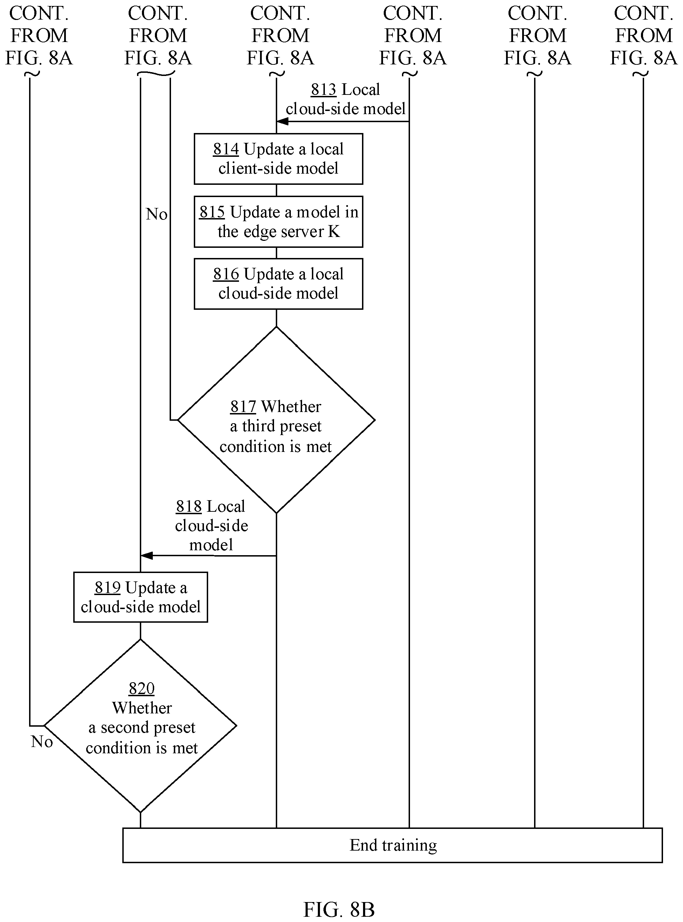

FIG. 8A and FIG. 8B are a schematic flowchart of another federated learning method according to this application.

Details are as follows:

First, it should be noted that, in this embodiment, steps performed by a client are similar to the steps performed by the client in FIG. 7, and steps performed by an edge server are similar to the steps performed by the edge server in FIG. 7. A difference therebetween lies in that: The cloud server may be replaced with an edge server to serve as an upstream device of the edge server shown in FIG. 8A and FIG. 8B. Similar content is not described in the following, and some differences are described.

801: A cloud server delivers a cloud-side model to an edge server K.

During federated learning, the cloud server delivers a cloud-side model, that is, a global model stored in the cloud server, to a lower-layer edge server of the cloud server.

802: The edge server K delivers a model in a lower-layer edge server J to the edge server J.

After receiving the cloud-side model, the edge server K may update a local model in the edge server J by using the cloud-side model, and deliver the model in the edge server J to the lower-layer edge server. In this embodiment, the lower-layer edge server J is used as an example for description.

803: The edge server J delivers an edge server model to an edge server I.

After receiving the edge server model delivered by the upper-layer edge server, the edge server J may update a local model in the edge server J by using the received edge server model, and deliver the model in the edge server J to the lower-layer edge server.

804: The edge server I updates a model in the edge server I.

After receiving the model delivered by the upper-layer edge server, the edge server I may update a local model in the edge server I by using the model.

805: The edge server I delivers a model in the edge server I to the client.

806: The client trains a client-side model under a third sparsity constraint condition.

In this embodiment of this application, after receiving a model delivered by a lowest-layer edge server, the client may update a locally stored client-side model based on the received model, and then train the locally stored client-side model under a sparsity constraint and/or a distance constraint, to obtain a trained client-side model. Therefore, a sparse personalization model of the client can alleviate difficulty in federated learning and training caused by heterogeneity of data in different clients in federated learning, and reduce communication costs required by the client to upload a model to the edge server each time.

Usually, a $j^{th}$ client managed by an $i^{th}$ lowest-layer edge server receives models $y_i$ delivered by $i$ lowest-layer edge servers, and updates a personalization model $\theta_{i,j}$ of the client.

For step 806 in this application, refer to the related descriptions of step 704. Details are not described herein again.

807: The client uploads a trained client-side model to the edge server I.

After training the client-side model, the client may upload the trained client-side model to the edge server I, for example, upload a weight parameter or a gradient parameter of the model.

808: The edge server I updates a local client-side model.

809: The edge server I updates a model in the edge server I.

810: The edge server I updates the model in the edge server J.

811: The edge server I determines whether an updated model meets a first preset condition; and if yes, performs step 805; or if no, performs step 812.

For step 808 to step 811, refer to related descriptions of step 706 to step 709. Details are not described herein again.

812: The edge server I uploads a local cloud-side model to the edge server J.

813: The edge server J feeds a local cloud-side model back to the edge server K.

814: The edge server K updates a local client-side model.

815: The edge server K updates the model in the edge server J.

816: The edge server K updates a local cloud-side model.

817: The edge server K determines whether an updated cloud-side model meets a third preset condition; and if yes, performs step 802; or if no, performs step 818.

For step 813 to step 817, refer to related descriptions of step 706 to step 709. Details are not described herein again.

818: The edge server K feeds a local cloud-side model to the cloud server.

819: The cloud server updates a cloud-side model.

820: The cloud server determines whether an updated cloud-side model meets a second preset condition; and if no, performs step 801; or if yes, ends training.

For step 819 and step 820, refer to related descriptions of step 710 to step 712. Details are not described herein again.

Therefore, the federated learning method provided in this implementation of this application can adapt to a two-layer architecture, a three-layer architecture, or an architecture of more than three layers, and can adapt to more scenarios. This fully utilizes a data difference between clients and data distribution of each edge server, helps improve accuracy of a trained personalization model and global model of a client/an edge server, and finally obtains a global model with higher accuracy. In addition, model parameters are reduced by applying a sparsity constraint in a training process, to reduce a data amount of communication between devices, and reduce communication costs. In addition, when each device trains a model, a distance constraint may be applied, so that depersonalization is implemented to a specific extent, personalization of an edge server and a client may also be retained to a specific extent. In this way, a finally obtained model can adapt to a data structure or data distribution difference between devices, and the model has better adaptability and a stronger generalization capability.

For ease of understanding, the following describes in more detail steps performed by the edge server when an architecture of more than three layers is used.

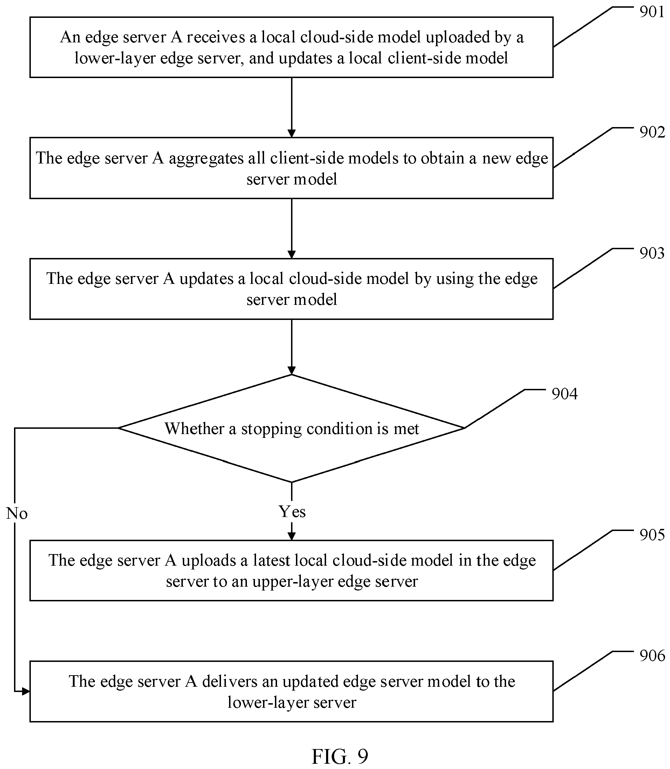

Steps performed by an edge server at a middle layer may be understood as being decomposed into a plurality of serial execution blocks. The following uses an example to describe steps included in each execution block, that is, the steps performed by the edge server at the middle layer. FIG. 9 is a schematic flowchart of another federated learning method according to this application.

901: An edge server A receives a local cloud-side model uploaded by a lower-layer edge server, and updates a local client-side model.

The edge server A manages $M$ lower-layer edge servers ($M > 1$). The edge server A first receives local cloud-side models, uploaded by the $M$ lower-layer edge servers managed by the edge server A, of the lower-layer edge servers, where the local cloud-side models are denoted as $w_{l,i}$; local client-side models that are corresponding to the local cloud-side models and that are obtained through calculation by using a sparsity constraint and/or a distance constraint are denoted as $y_{p,i}$, $i = 1, 2, \ldots, M$; and a cloud-side model currently stored by the edge server A is denoted as $w$.

For example, a manner in which the edge server A updates the local client-side model may be represented as follows:

$$y_{p,i} = \arg\min_{y_{p,i} \in \mathbb{R}^d} \left\{ \frac{\lambda_1}{2} \left\| w_{l,i} - y_{p,i} \right\|^2 + \frac{\lambda_2}{2} \left\| w_{p,i} - w \right\|^2 \right\}, j = 1, 2, \ldots, J_i$$

$\lambda_1$ and $\lambda_2$ are hyperparameters, and represent weights of constraint functions, $\|w_{l,i} - y_{p,i}\|^2$ is used to represent an $l_2$ norm constraint formed by a distance between $w_{l,i}$ and $y_{p,i}$, and $\|w_{p,i} - w\|^2$ may represent an $l_2$ norm constraint formed by a distance between $w_{p,i}$ and locally stored $w$. The norm herein may alternatively be replaced with an inner product, a Euclidean distance, or the like. The norm may be adjusted based on an actual application scenario.

Certainly, in addition to the foregoing manner, another manner of obtaining a new neural network model through calculation by using a local cloud-side model $w_{l,i}$ uploaded by a lower-layer edge server. This is not described herein again.

902: The edge server A aggregates all client-side models to obtain a new edge server model.

In step 901, calculation is performed to obtain $M$ local client-side models $y_{p,i}$, where $i = 1, 2, \ldots, M$. A local model currently stored in the edge server A is denoted as $w$, and an edge server model obtained by aggregating the $M$ local client-side models is denoted as $y_p$.

A specific aggregation manner in which the edge server A aggregates all the client-side models is not limited. For example, the aggregation manner may be calculating a weighted sum of models, or may be calculating an average value of the models, or another similar manner.

In a possible implementation, performing aggregation to obtain $y_p$ may be represented as follows:

$$y_p = \frac{1}{M} \sum_{i=1}^{M} y_{p,i}$$

In addition, sampling may alternatively be first performed on a local personalization model $y_{p,i}$. For example, some $y_{p,i}$ are selected, and then the selected models are aggregated to obtain a new edge server model $y_p$.

Therefore, in this implementation of this application, by using the edge server model, different edge servers can train different networks based on lower-layer edge servers managed by the edge servers, and the edge server model is not used for a new uploaded model obtained by an upper-layer edge server through aggregation. This improves performance of a trained neural network, and improves recognition accuracy of a global model in federated learning.

903: The edge server A updates a local cloud-side model by using the edge server model.

When updating the local cloud-side model $w$ in the edge server A, a gradient descent manner may be used to update the locally stored cloud-side model $w$. An update manner is represented as follows:

$$w \leftarrow w - \eta \left[ \lambda (w - y_p) + \gamma \nabla \phi_\rho(w) \right]$$

$\eta$ represents a learning rate in a gradient descent process. The learning rate may be a preset value or may be a value determined based on an actual application scenario. $\lambda$ and $\gamma$ are hyperparameters, and $\nabla \phi_\rho(w)$ is a sparsity constraint. Therefore, in this implementation of this application, the sparsity constraint may be applied when the edge server updates the local client-side model, to reduce parameters in a finally obtained model, thereby reducing a communication amount of communication between the edge server and another device and reducing communication costs.

904: The edge server A determines whether an updated cloud-side model meets a stopping condition; and if yes, performs step 905; or if no, performs step 906.

The edge server A determines whether the updated cloud-side model meets the stopping condition. The stopping condition may be that the edge server model converges, a quantity of cycles reaches a predetermined quantity of times, output accuracy of the edge server model reaches a threshold, or the like. For the stopping condition, refer to the foregoing first preset condition or second preset condition or the like. Details are not described herein again.

905: The edge server A uploads a latest local cloud-side model to an upper-layer edge server.

If the cloud-side model currently meets the stopping condition, the edge server A may upload the latest local cloud-side model to an upper-layer edge service, so that the upper-layer edge server uses the cloud-side model to update a local cloud-side model of the upper-layer edge server.

906: The edge server A delivers an updated edge server model to a lower-layer edge server.

If the edge server model does not meet the stopping condition currently, the server A may continue to deliver the updated edge server model to a lower-layer edge server, so that the upper-layer edge server delivers the edge server model to a lower-layer edge server downward layer by layer, and a most downstream client continues to train the received model.

Therefore, in this implementation of this application, in an architecture of more than three layers, the edge server may interact with an adjacent edge server, and train a received model by using a sparsity constraint, to reduce parameters in the model, and reduce communication costs of communication between the edge server and an upstream device or a downstream device.

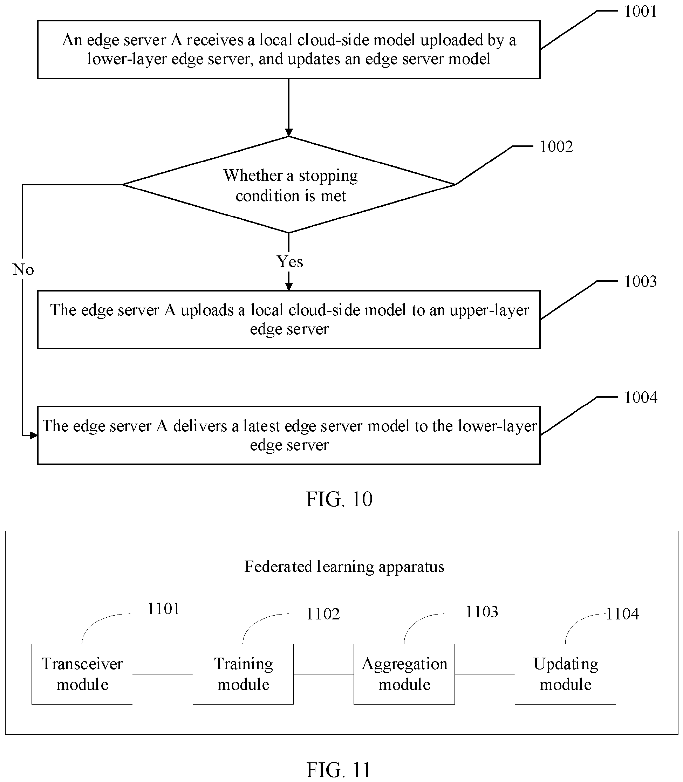

In addition, FIG. 10 is a schematic flowchart of another federated learning method according to this application. Details are as follows:

1001: An edge server A receives a local cloud-side model uploaded by a lower-layer edge server, and performs aggregation to obtain an edge server model.

The edge server A manages $M$ lower-layer edge servers ($M > 1$). The edge server A first receives local cloud-side models, uploaded by the $M$ lower-layer edge servers managed by the edge server A, of the lower-layer edge servers, where the local cloud-side models are denoted as $w_{l,i}$; local client-side models that are corresponding to the local cloud-side models and that are obtained through calculation by using a sparsity constraint and/or a distance constraint are denoted as $y_{p,i}$ where $i = 1, 2, ..., M$, and a cloud-side model currently stored by the edge server A is denoted as $w$.

In a possible implementation, a manner of aggregating the received cloud-side model may be represented as follows:

$$w = \frac{1}{M} \sum_{i=1}^{M} w_{l,i}$$

1002: The edge server A determines whether the edge server model meets a stopping condition; and if yes, performs step 1003; or if no, performs step 1004.

1003: The edge server A uploads a local cloud-side model to an upper-layer edge server.

1004: The edge server A delivers a latest edge server model to the lower-layer edge server.

Step 1002 to step 1004 are similar to step 904 to step 906, and details are not described herein again.

Therefore, in this implementation of this application, for an edge server at a middle layer, alternatively, a local client-side model may not need to be updated to adapt to a federated learning system having an architecture of more layers. This improves efficiency of federated learning.

The foregoing describes in detail a procedure of the federated learning method provided in this application. The following further describes, based on the foregoing procedure of the method, an apparatus for performing the procedure of the method.

FIG. 11 is a schematic diagram of a structure of a federated learning apparatus according to this application. The federated learning apparatus may be configured to perform the steps performed by the server in FIG. 6 to FIG. 10. The federated learning apparatus may include:

a transceiver module 1101, configured to receive information about at least one first model sent by at least one downstream device;

a training module 1102, configured to train the at least one first model to obtain at least one trained first model;

an aggregation module 1103, configured to aggregate the at least one trained first model to obtain an aggregation result; and

an updating module 1104, configured to update a locally stored second model based on the aggregation result, to obtain an updated second model.

In a possible implementation, the training module 1102 is specifically configured to train the at least one first model under a constraint of a first sparsity constraint condition, to obtain the at least one trained first model, where the first sparsity constraint condition includes a constraint formed by a function for reducing parameters in the first model.

In a possible implementation, the training module 1102 is specifically configured to train the at least one first model under constraints of a first sparsity constraint condition and a first distance constraint condition, to obtain the at least one trained first model, where the first sparsity constraint condition includes a constraint formed by a function for reducing parameters in the first model, and the first distance constraint condition includes a constraint formed by a similarity or a distance between the at least one first model and the second model.

In a possible implementation, the training module 1102 is specifically configured to: perturb the at least one first model by using noise, to obtain at least one updated first model; and train the at least one updated first model under the constraints of the first sparsity constraint condition and the first distance constraint condition, to obtain the at least one trained first model.

In a possible implementation, the first distance constraint condition further includes a constraint formed by a similarity or a distance between the second model and a third model, and the third model is a model sent by an upstream device.

In a possible implementation, the first sparsity constraint condition includes a norm of a vector or matrix of the at least one first model; and the norm includes an $l_0$ norm, an $l_1$ norm, an $l_p$ norm, an $l_{12}$ norm, an $l_{p2}$ norm, a continuous function obtained after $l_0$ norm transformation, a continuous function obtained after norm $l_1$ transformation, a continuous function obtained after $l_p$ norm transformation, a continuous function obtained after $l_{12}$ norm transformation, or a continuous function obtained after $l_{p2}$ norm transformation; and $p \in (0,1)$.

In a possible implementation, the transceiver module 1101 is further configured to receive the third model sent by the upstream device to a first server; and

the training module 1102 is further configured to update a locally stored model based on the third model, to obtain the second model.

In a possible implementation, the training module 1102 is further configured to train the third model to obtain an updated third model.

In a possible implementation, the training module 1102 is specifically configured to train the third model under a constraint of a second sparsity constraint condition, to obtain the trained third model, where the second sparsity constraint condition includes a constraint formed by a function for reducing parameters in the third model.

In a possible implementation, the transceiver module 1101 is further configured to send information about the trained third model to the upstream device.

In a possible implementation, the transceiver module 1101 is further configured to send the updated second model to the at least one downstream device as a new model, so that the at least one downstream device trains the new first model until a third model that meets a requirement is obtained.

In a possible implementation, the transceiver module 1101 is further configured to: after the first server aggregates the at least one trained first model to obtain the updated second model, send information about the updated second model to the upstream device, so that the upstream device trains the third model based on the information about the updated second model, to obtain a trained third model.

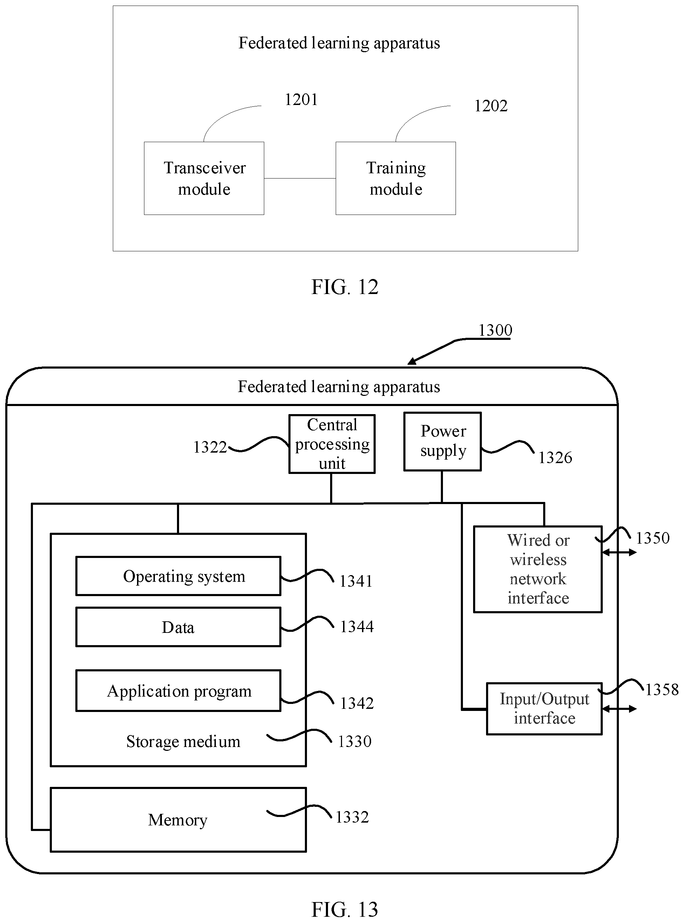

FIG. 12 is a schematic diagram of a structure of another federated learning apparatus according to this application. The federated learning apparatus may be configured to perform the steps performed by the client in FIG. 6 to FIG. 10. The federated learning apparatus may include:

a transceiver module 1201, configured to receive information about a first model sent by a first server; and

a training module 1202, configured to train the first model under a constraint of a third sparsity constraint condition, to obtain a trained first model, where the third sparsity constraint condition includes a constraint formed by a function for reducing parameters in the first model.

The transceiver module 1201 is further configured to send information about the trained first model to the first server, so that the first server retrains the first model based on the received information about the trained first model, to obtain a new first model.

In a possible implementation, the training module 1202 is specifically configured to train, by a first client, the first model under constraints of the third sparsity constraint condition and a second distance constraint condition, to obtain the trained first model, where the second distance constraint condition includes a constraint formed by a similarity or a distance between the first model and a locally stored fourth model.

An embodiment of this application further provides a server. FIG. 13 is a schematic diagram of a structure of a server according to an embodiment of this application. The federated learning apparatus described in the embodiment corresponding to FIG. 11 may be deployed in a federated learning apparatus 1300 to implement functions of the server in the embodiments corresponding to FIG. 6 to FIG. 10. Specifically, the federated learning apparatus 1300 may vary considerably depending on a configuration or performance, and may include one or more central processing units CPU 1322 (for example, one or more processors), a memory 1332, and one or more storage media 1330 (for example, one or more mass storage devices) that store an application program 1342 or data 1344.

The memory 1332 and the storage medium 1330 may be a transient memory or a persistent memory. In an embodiment, the memory 1332 is a random access memory (random access memory, RAM), and may directly exchange data with the central processing unit 1322 for loading the data 1344 and the application program 1342 and/or an operating system 1341 for direct operation and use by the central processing unit 1322. The memory 1332 is usually used as a temporary data storage medium for the operating system or other running programs. A program stored in the storage medium 1330 may include one or more modules (not shown in FIG. 13). Each module may include a series of instruction operations in the federated learning apparatus.

Further, the central processing unit 1322 may be configured to: communicate with the storage medium 1330, and perform, on the federated learning apparatus 1300, the series of instruction operations in the storage medium 1330. In a possible implementation, the storage medium 1330 stores program instructions and data that are corresponding to the method steps shown in any one of the embodiments in FIG. 6 to FIG. 10.

The federated learning apparatus 1300 may further include one or more power supplies 1326, one or more wired or wireless network interfaces 1350, one or more input/output interfaces 1358, and/or one or more operating systems 1341 such as Windows ServerTM, Mac OS XTM, UnixTM, LinuxTM, and FreeBSDTM.

An embodiment of this application further provides a federated learning apparatus. The federated learning apparatus may also be referred to as a digital processing chip or a chip. The chip includes a processing unit and a communication interface. The processing unit may obtain program instructions through the communication interface. When the program instructions are executed by the processing unit, the processing unit is configured to perform the method steps performed by the server in any one of the embodiments in FIG. 6 to FIG. 10.

An embodiment of this application further provides a digital processing chip. A circuit and one or more interfaces that are configured to implement the processor 1322 or functions of the processor 1322 are integrated into the digital processing chip. When a memory is integrated into the digital processing chip, the digital processing chip may complete the method steps in any one or more of the foregoing embodiments. When no memory is integrated into the digital processing chip, the digital processing chip may be connected to an external memory through a communication interface. The digital processing chip implements, based on program code stored in the external memory, actions performed by the server apparatus in the foregoing embodiments.

More specifically, when the federated learning apparatus provided in this embodiment of this application is a chip, the chip specifically includes a processing unit and a communication unit. The processing unit may be, for example, a processor. The communication unit may be, for example, an input/output interface, a pin, or a circuit. The processing unit may execute computer-executable instructions stored in a storage unit, so that the chip in the server performs the federated learning method described in the embodiments shown in FIG. 6 to FIG. 10.

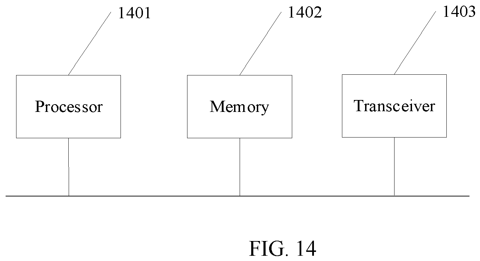

FIG. 14 is a schematic diagram of a structure of another client according to this application. Details are as follows:

The client may include a processor 1401 and a memory 1402. The processor 1401 and the memory 1402 are connected to each other through a line. The memory 1402 stores program instructions and data.

The memory 1402 stores program instructions and data that are corresponding to the steps in FIG. 6 to FIG. 10.

The processor 1401 is configured to perform the method steps performed by the client described in any one of the embodiments in FIG. 6 to FIG. 10.

The client may further include a transceiver 1403, configured to receive or send data.

An embodiment of this application further provides a computer-readable storage medium. The computer-readable storage medium stores a program. When the program is run on a computer, the computer is enabled to perform the steps performed by the client in the methods described in the embodiments shown in FIG. 6 to FIG. 10.

An embodiment of this application further provides a federated learning apparatus. The federated learning apparatus may also be referred to as a digital processing chip or a chip. The chip includes a processing unit and a communication interface. The processing unit may obtain program instructions through the communication interface. When the program instructions are executed by the processing unit, the processing unit is configured to perform the method steps performed by the client in any one of the embodiments in FIG. 6 to FIG. 10.

An embodiment of this application further provides a digital processing chip. A circuit and one or more interfaces that are configured to implement the processor 1401 or functions of the processor 1401 are integrated into the digital processing chip. When a memory is integrated into the digital processing chip, the digital processing chip may complete the method steps in any one or more of the foregoing embodiments. When no memory is integrated into the digital processing chip, the digital processing chip may be connected to an external memory through a communication interface. The digital processing chip implements, based on program code stored in the external memory, actions performed by the server apparatus in the foregoing embodiments.

More specifically, when the federated learning apparatus provided in this embodiment of this application is a chip, the chip specifically includes a processing unit and a communication unit. The processing unit may be, for example, a processor. The communication unit may be, for example, an input/output interface, a pin, or a circuit. The processing unit may execute computer-executable instructions stored in a storage unit, so that the chip in the server performs the federated learning method described in the embodiments shown in FIG. 6 to FIG. 10.

Optionally, the storage unit may be a storage unit in the chip, for example, a register or a cache. The storage unit may alternatively be a storage unit that is in a wireless access device and that is outside the chip, for example, a read-only memory (read-only memory, ROM) or another type of static storage device that can store static information and instructions, or a random access memory RAM.

Specifically, the processing unit or the processor may be a central processing unit, a network processing unit (neural-network processing unit, NPU), a graphics processing unit (graphics processing unit, GPU), a digital signal processor (digital signal processor, DSP), an application-specific integrated circuit (application specific integrated circuit, ASIC), a field programmable gate array (field programmable gate array, FPGA), another programmable logic device, a discrete gate, a transistor logic device, a discrete hardware component, or the like. A general-purpose processor may be a microprocessor, or may be any conventional processor or the like.

Any processor mentioned above may be a general-purpose central processing unit, a microprocessor, an ASIC, or one or more integrated circuits for controlling program execution of the methods in FIG. 3 to FIG. 14.

An embodiment of this application further provides a computer-readable storage medium. The computer-readable storage medium stores a program. When the program is run on a computer, the computer is enabled to perform the steps in the methods described in the embodiments shown in FIG. 3 to FIG. 14.

An embodiment of this application further provides a computer program product. When the computer program product runs on a computer, the computer is enabled to perform the steps performed by the data processing apparatus or the production plan generation apparatus in the methods described in the embodiments shown in FIG. 3 to FIG. 14.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions in the embodiments. In addition, in the accompanying drawings of the apparatus embodiments provided in this application, connection relationships between modules indicate that the modules have communication connections with each other. The communication connections may be specifically implemented as one or more communication buses or signal cables.

Based on the descriptions in the foregoing implementations, a person skilled in the art can clearly understand that this application may be implemented by using software in addition to necessary general-purpose hardware, or by using special-purpose hardware, including an application-specific integrated circuit, a dedicated CPU, a dedicated memory, a dedicated element or component, and the like. Usually, any function implemented by a computer program may be easily implemented by using corresponding hardware. In addition, there may be various specific hardware structures used to implement a same function, for example, an analog circuit, a digital circuit, or a dedicated circuit. However, in more cases, a software program implementation is a better implementation for this application. Based on such an understanding, the technical solutions in this application essentially or the part contributing to a conventional technology may be implemented in a form of a software product. The computer software product is stored in a readable storage medium, such as a floppy disk, a USB flash drive, a removable hard disk, a read-only memory ROM, a random access memory RAM, a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In this specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "contain", and other variants thereof mean to cover the non-exclusive inclusion, for example, a process, method, system, product, or device that includes a list of steps or units is not necessarily limited to those steps or units expressly listed, but may include other steps or units not expressly listed or inherent to such a process, method, product, or device.

Finally, it should be noted that the foregoing descriptions are merely specific implementations of this application, but the protection scope of this application is not limited thereto. Any variation or replacement readily figured out by a person skilled in the art within the technical scope disclosed in this application shall fall within the protection scope of this application.

**Claims**

1.  A federated learning method, comprising:

    receiving, by a first server, information about at least one first model sent by at least one downstream device;
    training, by the first server, the at least one first model to obtain at least one trained first model;
    aggregating, by the first server, the at least one trained first model to obtain an aggregation result; and
    updating, by the first server, a locally stored second model based on the aggregation result, to obtain an updated second model.

2.  The method according to claim 1, wherein the training, by the first server, the at least one first model to obtain at least one trained first model comprises:
    training, by the first server, the at least one first model under a constraint of a first sparsity constraint condition, to obtain the at least one trained first model, wherein the first sparsity constraint condition comprises a constraint formed by a function for reducing parameters in the first model.

3.  The method according to claim 1, wherein the training, by the first server, the at least one first model to obtain at least one trained first model comprises:
    training, by the first server, the at least one first model under constraints of a first sparsity constraint condition and a first distance constraint condition, to obtain the at least one trained first model, wherein the first sparsity constraint condition comprises a constraint formed by a function for reducing parameters in the first model, and the first distance constraint condition comprises a constraint formed by a similarity or a distance between the at least one first model and the second model.

4.  The method according to claim 3, wherein the training, by the first server, the at least one first model under constraints of a first sparsity constraint condition and a first distance constraint condition, to obtain the at least one trained first model comprises:

    perturbing, by the first server, the at least one first model by using noise, to obtain at least one updated first model; and
    training, by the first server, the at least one updated first model under the constraints of the first sparsity constraint condition and the first distance constraint condition, to obtain the at least one trained first model.

5.  The method according to claim 3 or 4, wherein the first distance constraint condition further comprises a constraint formed by a similarity or a distance between the second model and a third model, and the third model is a model from an upstream device of the first server.

**6.** The method according to any one of claims 1 to 4, wherein the method further comprises:

receiving, by the first server, a third model from an upstream device; and
updating, by the first server, a locally stored model based on the third model, to obtain the second model.

**7.** The method according to claim 6, wherein after the obtaining an updated second model, the method further comprises: training, by the first server, the third model to obtain an updated third model.

**8.** The method according to claim 7, wherein the training, by the first server, the third model to obtain an updated third model comprises:
training, by the first server, the third model under a constraint of a second sparsity constraint condition, to obtain the trained third model, wherein the second sparsity constraint condition comprises a constraint formed by a function for reducing parameters in the third model.

**9.** The method according to claim 7 or 8, wherein the method further comprises:
sending, by the first server, information about the trained third model to the upstream device.

**10.** The method according to claim 7 or 8, wherein the method further comprises:
sending, by the first server, the updated second model to the at least one downstream device as a new first model, so that the at least one downstream device trains the new first model.

**11.** The method according to claim 6, wherein after the obtaining an updated second model, the method further comprises:
sending, by the first server, information about the updated second model to the upstream device, so that the upstream device trains the third model based on the information about the updated second model, to obtain a trained third model.

**12.** The method according to any one of claims 2 to 5, wherein the first sparsity constraint condition comprises a norm of a vector or matrix of the at least one first model; and the norm comprises an $l_0$ norm, an $l_1$ norm, an $l_p$ norm, an $l_{12}$ norm, an $l_{p2}$ norm, a continuous function obtained after $l_0$ norm transformation, a continuous function obtained after $l_1$ norm transformation, a continuous function obtained after $l_p$ norm transformation, a continuous function obtained after $l_{12}$ norm transformation, or a continuous function obtained after $l_{p2}$ norm transformation; and $p \in (0,1)$.

**13.** A federated learning method, comprising:

receiving, by a first client, information about a first model sent by a first server;
training, by the first client, the first model under a constraint of a third sparsity constraint condition, to obtain a trained first model, wherein the third sparsity constraint condition comprises a constraint formed by a function for reducing parameters in the first model; and
sending, by the first client, information about the trained first model to the first server, so that the first server retrains the first model based on the received information about the trained first model, to obtain a new first model.

**14.** The method according to claim 13, wherein the training, by the first client, the first model under a constraint of a third sparsity constraint condition, to obtain a trained first model comprises:
training, by the first client, the first model under constraints of the third sparsity constraint condition and a second distance constraint condition, to obtain the trained first model, wherein the second distance constraint condition comprises a constraint formed by a similarity or a distance between the first model and a locally stored fourth model.

**15.** A federated learning apparatus, comprising:

a transceiver module, configured to receive information about at least one first model sent by at least one downstream device;
a training module, configured to train the at least one first model to obtain at least one trained first model;
an aggregation module, configured to aggregate the at least one trained first model to obtain an aggregation result; and
an updating module, configured to update a locally stored second model based on the aggregation result, to obtain an updated second model.

**16.** The apparatus according to claim 15, wherein
the training module is specifically configured to train the at least one first model under a constraint of a first sparsity constraint condition, to obtain the at least one trained first model, wherein the first sparsity constraint condition comprises a constraint formed by a function for reducing parameters in the first model.

17. The apparatus according to claim 15, wherein
the training module is specifically configured to train the at least one first model under constraints of a first sparsity constraint condition and a first distance constraint condition, to obtain the at least one trained first model, wherein the first sparsity constraint condition comprises a constraint formed by a function for reducing parameters in the first model, and the first distance constraint condition comprises a constraint formed by a similarity or a distance between the at least one first model and the second model.

18. The apparatus according to claim 17, wherein the training module is specifically configured to:

   perturb the at least one first model by using noise, to obtain at least one updated first model; and
   train the at least one updated first model under the constraints of the first sparsity constraint condition and the first distance constraint condition, to obtain the at least one trained first model.

19. The apparatus according to claim 17 or 18, wherein the first distance constraint condition further comprises a constraint formed by a similarity or a distance between the second model and a third model, and the third model is a model sent by an upstream device.

20. The apparatus according to any one of claims 15 to 19, wherein

   the transceiver module is further configured to receive the third model sent by the upstream device to the first server; and
   the training module is further configured to update a locally stored model based on the third model, to obtain the second model.

21. The apparatus according to claim 20, wherein the training module is further configured to train the third model to obtain an updated third model.

22. The apparatus according to claim 21, wherein
the training module is specifically configured to train the third model under a constraint of a second sparsity constraint condition, to obtain the trained third model, wherein the second sparsity constraint condition comprises a constraint formed by a function for reducing parameters in the third model.

23. The apparatus according to claim 21 or 22, wherein
the transceiver module is further configured to send information about the trained third model to the upstream device.

24. The apparatus according to claim 21 or 22, wherein
the transceiver module is further configured to send the updated second model to the at least one downstream device as a new first model, so that the at least one downstream device trains the new first model.

25. The apparatus according to claim 20, wherein
the transceiver module is further configured to send information about the updated second model to the upstream device, so that the second server trains the third model based on the information about the updated second model, to obtain a trained third model.

26. The apparatus according to any one of claims 16 to 19, wherein the first sparsity constraint condition comprises a norm of a vector or matrix of the at least one first model; and the norm comprises an $l_0$ norm, an $l_1$ norm, an $l_p$ norm, an $l_{12}$ norm, an $l_{p2}$ norm, a continuous function obtained after $l_0$ norm transformation, a continuous function obtained after $l_1$ norm transformation, a continuous function obtained after $l_p$ norm transformation, a continuous function obtained after $l_{12}$ norm transformation, or a continuous function obtained after $l_{p2}$ norm transformation; and $p \in (0,1)$.

27. A federated learning apparatus, comprising:

   a transceiver module, configured to receive information about a first model sent by a first server; and
   a training module, configured to train the first model under a constraint of a third sparsity constraint condition, to obtain a trained first model, wherein the third sparsity constraint condition comprises a constraint formed by a function for reducing parameters in the first model; and

the transceiver module is further configured to send information about the trained first model to the first server, so that the first server retrains the first model based on the received information about the trained first model, to obtain a new first model.

28. The apparatus according to claim 27, wherein
the training module is specifically configured to train, by the first client, the first model under constraints of the third sparsity constraint condition and a second distance constraint condition, to obtain the trained first model, wherein the second distance constraint condition comprises a constraint formed by a similarity or a distance between the first model and a locally stored fourth model.

29. A federated learning system, comprising a plurality of servers and at least one client, the at least one client establishes a connection to the plurality of servers;

any one of the plurality of servers is configured to implement the steps in the method according to any one of claims 1 to 12; and
the at least one client is configured to implement the steps in the method according to claim 13 or 14.

30. A federated learning apparatus, comprising one or more processors, wherein the one or more processors are coupled to a memory; the memory stores a program; and when program instructions stored in the memory are executed by the one or more processors, the steps in the method according to any one of claims 1 to 12 are implemented.

31. A federated learning apparatus, comprising one or more processors, wherein the one or more processors are coupled to a memory; the memory stores a program; and when program instructions stored in the memory are executed by the one or more processors, the steps in the method according to claim 13 or 14 are implemented.

32. A computer-readable storage medium, comprising a program, wherein when the program is executed by a processing unit, the method according to any one of claims 1 to 14 is performed.

33. A computer program product, comprising a computer program/instructions, wherein when the computer program/instructions is/are executed by a processor, the steps in the method according to any one of claims 1 to 14 are implemented.

FIG. 1

Client 1

Client 2

Client N–1

Client N

FIG. 2

FIG. 3

FIG. 4

FIG. 5

FIG. 6

| Cloud server | Edge server | Client |
|---|---|---|

701 Cloud-side model

702 Update an edge server model

703 Edge server model

704 Train a client-side model under a distance constraint and/or a sparsity constraint

705 Trained client-side model

706 Update a local client-side model

707 Update an edge server model

708 Update a local cloud-side model

709 Whether a first preset condition is met

No

710 Local cloud-side model

No

711 Update a cloud-side model

712 Whether a second preset condition is met

End training

FIG. 7

FIG. 8A

CONT.
FROM
FIG. 8A

CONT.
FROM
FIG. 8A

CONT.
FROM
FIG. 8A

CONT.
FROM
FIG. 8A

CONT.
FROM
FIG. 8A

CONT.
FROM
FIG. 8A

813 Local
cloud-side model

814 Update a local
client-side model

No

815 Update a model in
the edge server K

816 Update a local
cloud-side model

817 Whether
a third preset
condition is met

818 Local
cloud-side
model

819 Update a
cloud-side model

820
Whether
a second preset
condition is met

No

End training

FIG. 8B

An edge server A receives a local cloud-side model uploaded by a lower-layer edge server, and updates a local client-side model — 901

↓

The edge server A aggregates all client-side models to obtain a new edge server model — 902

↓

The edge server A updates a local cloud-side model by using the edge server model — 903

↓

Whether a stopping condition is met — 904

No

Yes

↓

The edge server A uploads a latest local cloud-side model in the edge server to an upper-layer edge server — 905

↓

The edge server A delivers an updated edge server model to the lower-layer server — 906

FIG. 9

An edge server A receives a local cloud-side model uploaded by a lower-layer edge server, and updates an edge server model — 1001

Whether a stopping condition is met — 1002

No

Yes

The edge server A uploads a local cloud-side model to an upper-layer edge server — 1003

The edge server A delivers a latest edge server model to the lower-layer edge server — 1004

FIG. 10

Federated learning apparatus

1101

1102

1103

1104

| Transceiver module | Training module | Aggregation module | Updating module |

FIG. 11

Federated learning apparatus

1201

Transceiver module

1202

Training module

FIG. 12

1300

Federated learning apparatus

1322

Central processing unit

Power supply

1326

Operating system 1341

Data 1344

Application program 1342

Storage medium 1330

Memory 1332

Wired or wireless network interface 1350

Input/Output interface 1358

FIG. 13

1401　　　　　　　1402　　　　　　　1403

| Processor | | Memory | | Transceiver |

FIG. 14

## INTERNATIONAL SEARCH REPORT

| | International application No. |
|---|---|
| | **PCT/CN2022/093183** |

| **A.** | **CLASSIFICATION OF SUBJECT MATTER** |
|---|---|

G06N 20/00(2019.01)i

According to International Patent Classification (IPC) or to both national classification and IPC

| **B.** | **FIELDS SEARCHED** |
|---|---|

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, BAIDU: 联邦学习, 联合学习, 联盟学习, 边缘服务器, 稀疏, 距离, 相似, 约束, 范数, federated learning, edge server?, sparse, distance, similar, constraint, norm

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 113469367 A (HUAWEI TECHNOLOGIES CO., LTD.) 01 October 2021 (2021-10-01) claims 1-33 | 1-33 |
| X | CN 112817653 A (XI'AN JIAOTONG UNIVERSITY) 18 May 2021 (2021-05-18) description, paragraphs 62, 66 and 91, and description, figure 1 | 1-33 |
| A | CN 111447083 A (NATIONAL UNIVERSITY OF DEFENSE TECHNOLOGY OF PLA) 24 July 2020 (2020-07-24) entire document | 1-33 |
| A | CN 112070240 A (TSINGHUA UNIVERSITY; CENTRAL SOUTH UNIVERSITY) 11 December 2020 (2020-12-11) entire document | 1-33 |
| A | US 2021073639 A1 (GOOGLE L.L.C.) 11 March 2021 (2021-03-11) entire document | 1-33 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 July 2022** | **22 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/093183**

| Patent document cited in search report | | | Publication date (day/month/year) | Patent family member(s) | | | Publication date (day/month/year) |
|---|---|---|---|---|---|---|---|
| CN | 113469367 | A | 01 October 2021 | None | | | |
| CN | 112817653 | A | 18 May 2021 | None | | | |
| CN | 111447083 | A | 24 July 2020 | None | | | |
| CN | 112070240 | A | 11 December 2020 | None | | | |
| US | 2021073639 | A1 | 11 March 2021 | DE | 202019106332 | U1 | 14 May 2020 |
| | | | | US | 2020175365 | A1 | 04 June 2020 |
| | | | | US | 10769529 | B2 | 08 September 2020 |
| | | | | US | 2020401893 | A1 | 24 December 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110573525